# EUROPÄISCHE PATENTSCHRIFT

(11) **EP 2 138 526 B1**
(45) Veröffentlichungstag und Bekanntmachung des Hinweises auf die Patenterteilung: **25.12.2013**
(21) Anmeldenummer: 09161315.8
(22) Anmeldetag: 28.05.2009
(51) Int. Cl.: C08G 77/46, C08G 65/26

(54) **Neue Polyethersiloxane enthaltende Alkoxylierungsprodukte durch direkte Alkoxylierung organomodifizierter alpha, omega-Dihydroxysiloxane an Doppelmetallcyanid (DMC)-Katalysatoren, sowie Verfahren zu deren Herstellung**
New alkoxylisation products containing polyether siloxanes by means of direct alkoxylisation of organomodified alpha, omega dihydroxy siloxanes to double metal cyanide (DMC) catalysts and method for its production
Produits d'alkoxylation comprenant des nouveaux polyéthersiloxanes par alkoxylation directe d'alpha et d'oméga-dihydroxysiloxanes organomodifiés sur des catalyseurs de cyano-métalliques doubles (DMC) et leur procédé de fabrication

(30) Priorität: 27.06.2008 DE 102008002713
(43) Veröffentlichungstag der Anmeldung: 30.12.2009
(73) Patentinhaber: Evonik Degussa GmbH, 45128 Essen (DE)
(72) Erfinder: Schubert, Dr. Frank, 47506, Neukirchen-Vluyn (DE); Knott, Dr. Wilfried, 45355, Essen (DE)

(56) Entgegenhaltungen:
- EP-A- 0 573 864
- US-A- 5 719 249
- US-A- 5 880 245

## Beschreibung

Die Erfindung betrifft neue Polyethersiloxane enthaltende Alkoxylierungsprodukte durch direkte Alkoxylierung organomodifizierter α,ω-Dihydroxysiloxane an DMC-Katalysatoren, sowie Verfahren zu deren Herstellung.

Zur Herstellung der wirtschaftlich bedeutsamen Klasse der SiOC-verknüpften Polyethersiloxane, auch als Siliconpolyether oder Siloxan-Polyether-Copolymere bezeichnet, bedient man sich nach heutigem Stand der Technik mehrerer Verfahrensvarianten.

Klassischerweise werden SiOC-Verknüpfungen durch die Reaktion eines Siloxans mit einer am Siliciumatom gebundenen Abgangsgruppe (z.B. Halogen) und einem Alkohol oder Polyetherol gebildet. Letzterer wird üblicherweise zuvor durch Alkoxylierung von monohydroxyfunktionellen Startverbindungen wie zum Beispiel Butanol mit Alkylenoxiden gewonnen. Besonders Chlorsiloxane sind als Ausgangsverbindungen für diesen Reaktionstyp verbreitet. Chlorsiloxane sind jedoch schwierig zu handhaben, da sie äußerst reaktionsfreudig sind. Ihr Einsatz ist weiterhin mit dem Nachteil verbunden, dass der im Verlauf der Reaktion gebildete Chlorwasserstoff eine Handhabung auf korrosionsbeständige Anlagen beschränkt und zu ökologischen Problemen führt. Darüber hinaus können in Gegenwart von Chlorsiloxanen und Alkoholen bzw. Polyetherolen organische Chlorverbindungen entstehen, die aus toxikologischen Gründen nicht wünschenswert sind. Weiterhin ist es nicht einfach, bei der Reaktion eines Chlorsiloxans mit einem Alkohol oder Polyetherol einen quantitativen Umsatz zu erreichen, so dass die OH-funktionelle Komponente oft in einem stöchiometrischen Überschuss bezogen auf die SiCl-Funktionen der Siloxankomponente eingesetzt werden muss. Die Verwendung eines Polyetherüberschusses bedeutet in der Praxis, dass in den so hergestellten Siliconpolyethern unvermeidbar größere Mengen an unreagierten Überschusspolyethern enthalten sind, die die Konzentration der tensidisch wirksamen Siliconpolyether herabsetzen und die anwendungstechnischen Eigenschaften der Zielprodukte beeinträchtigen. Häufig müssen bei der Chlorsiloxanroute Basen als HCl-Fänger eingesetzt werden, um gute Umsätze zu erzielen. Durch Einsatz dieser Basen entstehen große Salzmengen, deren Entfernung im industriellen Maßstab Schwierigkeiten bereitet.

Als Alternative zu diesem Verfahren bietet sich an, Alkohole oder Polyetherole mit Wasserstoffsiloxanen umzusetzen, in denen Wasserstoff direkt am Silicium gebunden ist. Unter geeigneten Bedingungen kommt es hier bei Ausbildung der SiOC-Bindung lediglich zur Abspaltung von Wasserstoff. Diese dehydrogenative Kondensation läuft nur in Anwesenheit eines Katalysators ab. US-A-5 147 965 verweist auf ein Verfahren, das in der japanischen Patentveröffentlichung JP 480-19941 beschrieben wird und bei dem ein Wasserstoffsiloxan mit einem Alkohol unter Zugabe von Alkalimetallhydroxiden oder Alkalimetallalkoxiden umgesetzt wird. Nachteilig an diesem Verfahren ist, dass die Katalysatoren nach beendeter Reaktion neutralisiert werden müssen und die dabei entstehende Salzfracht zwar geringer als die des Chlorsiloxanverfahrens ist, aber dennoch aufwändig abfiltriert werden muss. EP-A-0 475 440 beschreibt ein Verfahren, bei dem Wasserstoffsiloxane mit einem Alkohol unter Zugabe einer organischen Säure in Gegenwart eines Pt-Salzes umgesetzt werden. Für die Reaktion ist es unabdingbar, dass sowohl große Mengen an organischer Säure (0,1 bis 1 mol bezogen auf Alkohol), Toluol als Lösungsmittel und ein Platinsalz eingesetzt werden. Da sowohl Toluol als auch Säure im Endprodukt unerwünscht sind, müssen diese nach Reaktionsende wiederum abgetrennt werden. Platinsalze sind zudem nicht nur teuer, sondern aus physiologischer Sicht auch nicht unbedenklich. Gerade im Bereich der kosmetischen Industrie gibt es den Wunsch nach Produkten frei von Platin.

Ohne den Einsatz von Schwermetallen kommt das in J. Boyer, R. J. P. Corriu, R. Perz, C. Reye, J. Organomet. Chem. 1978, 157, 153-162 beschriebene Verfahren aus. Dabei werden Salze wie z.B. Kaliumtartrat, -phthalat oder -formiat als heterogene Katalysatoren eingesetzt. Die Umsetzungen erfordern allerdings den äquimolaren Einsatz der Salze bezogen auf die SiH-Einheiten und gelingen nur bei hohen Temperaturen von ca. 180 °C. Sowohl die drastischen Bedingungen als auch die notwendigen großen Salzmengen machen dieses Verfahren für den technischen Maßstab unattraktiv.

In den Patentanmeldungen DE 103 12 636 und DE 103 59 764 werden borhaltige Katalysatoren für die dehydrogenative Kondensation von Wasserstoffsiloxanen und Alkoholen eingesetzt. Die beschriebene Vorgehensweise birgt jedoch den Nachteil in sich, dass die Katalysatoren vergleichsweise teuer und die damit erzielten Produkte zum Teil nicht wirtschaftlich hergestellt werden können.

Alle vorgenannten Verfahren zur Herstellung von SiOCbasierenden Polyethersiloxanen sind zweistufige Prozesse. Die für die Umsetzung mit Chlor- oder Wasserstoffsiloxanen benötigten OH-funktionellen Polyether müssen dabei in einem separaten vorgeschalteten Alkoxylierungsschritt hergestellt werden. Konventionelle Polyetheralkohole, oft auch kurz einfach als Polyether oder Polyetherole bezeichnet und vorwiegend aus Propylenoxid und Ethylenoxid aufgebaut, sind seit langem bekannt und werden in großen Mengen technisch hergestellt. Die meisten Verfahren zur ihrer Herstellung bedienen sich basischer Katalysatoren wie z.B. der Alkalihydroxide und der Alkalimethanolate.

Besonders verbreitet und seit vielen Jahren bekannt ist der Einsatz von KOH. Typischerweise wird ein meist niedermolekularer hydroxy-funktioneller Starter wie Butanol in Gegenwart des alkalischen Katalysators mit einem Alkylenoxid wie Ethylenoxid, Propylenoxid, Butylenoxid oder einem Gemisch verschiedener Alkylenoxide zu einem Polyoxyalkylenpolyether mit terminaler O H-Gruppe umgesetzt. Die stark alkalischen Reaktionsbedingungen bei diese r sogenannten Living-Polymerisation fördern verschiedene Nebenreaktionen. Die Umlagerung von Propylenoxid in Allylalkohol, der seinerseits als Kettenstarter fungiert, und Kettenabbruchreaktionen führen zu Polyethern mit relativ breiter Molmassenverteilung und ungesättigten Nebenprodukten.

Zu den Nachteilen der basisch katalysierten Alkoxylierung zählt zweifelsfrei auch die Notwendigkeit, die erhaltenen Reaktionsprodukte mit Hilfe eines Neutralisationsschrittes von der aktiven Base zu befreien. Zwingend erforderlich sind dann die destillative Abtrennung des bei der Neutralisation entstehenden Wassers sowie die Abtrennung des gebildeten Salzes durch Filtration.

Neben der basenkatalysierten Reaktion sind auch saure Katalysen zur Alkoxylierung bekannt. So wird in DE 102004007561 die Verwendung von HBF₄ und von LewisSäuren wie z.B. BF₃, AlCl₃ und SnCl₄ in der Alkoxylierungstechnologie beschrieben.

Als nachteilig bei der säurekatalysierten Polyethersynthese erweist sich die mangelhafte Regioselektivität bei der Ringöffnung unsymmetrischer Oxirane wie z.B. Propylenoxid, die dazu führt, dass in nicht eindeutig zu steuernder Weise Polyoxyalkylenketten mit teils sekundären und primären OH-Termini erhalten werden. Wie im Falle der basenkatalysierten Alkoxylierungsreaktion ist auch hier eine Aufarbeitungssequenz von Neutralisation, Destillation und Filtration unabdingbar. Wird Ethylenoxid als Monomer in die säurekatalysierte Polyethersynthese eingebracht, so ist mit der Bildung von Dioxan als unerwünschtem Nebenprodukt zu rechnen.

Ein einstufiges Verfahren zur Herstellung von speziellen Polyethersiloxanen wird in US 5,175,327 beschriebenen. In Gegenwart konventioneller alkalischer bzw. saurer Katalysatoren wie Natriumhydroxid, Kaliumhydroxid, Natriummethanolat oder Phosphorsäure werden Polydimethylsilandiole unter Addition von Ethylenoxid

(EO) und/oder Propylenoxid (PO) an die SiOH-Gruppen direkt alkoxyliert.

Nach diesem Verfahren werden (im Gemisch mit Edukten und andere Komponenten, wie weiter unten dargelegt) Polyethersiloxane der Formel (IX) hergestellt 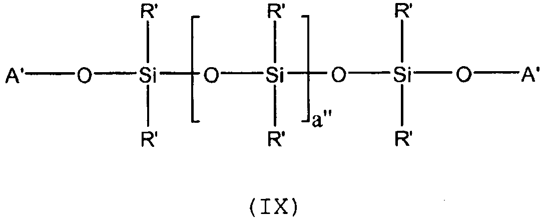 wobei A' gleich -(CH₂-CH₂-O)ₕ-(CH₂-CH(CH₃)O)ᵢ-(CH₂-CH₂-O)ⱼ-H ist und h, i, und j unabhängig voneinander Werte von 0 bis 200 annehmen können und die Summe aus h+i+j größer 0 ist und a" eine ganze Zahl mit einem Wert von 1 bis 2.000 ist. R' entspricht einer Methylgruppe.

Nachteilig an dem Verfahren ist seine eingeschränkte Anwendbarkeit. Die Siloxankomponente bzw. das Siloxanol und die entstehende SiOC-Bindung verfügen unter den basischen oder sauren Alkoxylierungsbedingungen nur über eine geringe hydrolytische Stabilität. Die unter basischen Bedingungen eingeleitete Umsetzung SiOH-Gruppen aufweisender Siloxane mit Alkylenoxiden birgt durch die unvermeidbare Bildung von Silanolatgruppen das Risiko, dass neben der angestrebten Alkoxylierung auch Reorganisations- und Äquilibrierungsreaktionen des Siloxangerüsts stattfinden können. Generell begrenzt sich der Einsatzbereich des in US 5,175,327 dargestellten Prozesses auf Polyetherketten des Typs Si-O-(EO)-(PO)-(EO)-H mit maximal 200 EO oder PO-Einheiten. Zudem ist die Abfolge der (EO) und (PO) Einheiten streng blockartig, da die Zugabe der Monomere nacheinander erfolgt und damit kein statistischer Einbau in die Molekülkette erfolgen kann (analog zu den Angaben der "general reaction conditions", den generellen Reaktionsbedingungen in Spalte 4 der Patentschrift). Andere, weniger reaktive Epoxidmonomere wie Butylenoxid, Styroloxid oder gar Glycidylverbindungen sind der beschriebenen Alkoxylierung nicht zugänglich. Die Labilität des Siloxangerüsts und der SiOC-Bindung der nach US 5,175,327 hergestellten Polyethersiloxane zwingt dazu, den eingesetzten alkalischen oder sauren Katalysator im Endprodukt zu belassen, da eine Neutralisation und damit Deaktivierung des Katalysators im wässerigen Medium mit anschließender Destillation und Salzfiltration, wie sie im Falle der konventionellen basischen oder sauren Katalyse von z.B. Alkoholen oder Phenolen üblich ist, zu inakzeptablen Siloxanumlagerungen und Hydrolysereaktionen führen würde. Die nach dem Verfahren gemäß US 5,175,327 herstellbaren Produkte enthalten demnach den noch aktiven Katalysator und sind folglich entweder basisch oder sauer. Die in der US 5,175,327 beschriebenen Umsetzungen können jedenfalls nicht zu den dort beschriebenen Endprodukten als reine Substanzen führen, sondern höchstens die Verbindungen in Mischung mit anderen Substanzen oder als Zwischenprodukte zur Verfügung stellen.

Generell können Säure- oder Base-labile Stoffsysteme nur schwierig bis gar nicht alkoxyliert werden. In besonderem Maße trifft das auf Organokieselsäurederivate wie Siloxanole zu, die eine ausgeprägte Tendenz zur Säure- bzw. Basen-induzierten Hydrolyse und Umlagerung des Siloxangerüsts zeigen. Dies gilt auch für die hier erfindungsgemäß verwendeten α,ω-Dihydroxysiloxane.

SiOC-verknüpfte Siliconpolyether stellen auf Grund ihrer grenzflächenaktiven Eigenschaften eine vielfältig einsetzbare Produktklasse dar. Je nach Zusammensetzung find en sie Anwendung z.B. als Polyurethanschaumstabilisatoren, Entschäumer, Netzmittel oder auch als Dispergieradditive.

Es fehlt bis heute ein Syntheseverfahren, dass es gestattet, SiOC-basierende Siliconpolyether auf einfache Weise in nur einem einfachen Verfahrensschritt herzustellen.

Aufgabe der vorliegenden Erfindung ist es daher, den geschilderten Mangel des Standes der Technik zu überwinden und ein einstufiges direktes Alkoxylierungsverfahren ausgehend von α,ω-Dihydroxysiloxanen und epoxyfunktionellen Monomeren bereit zu stellen sowie auf diesem Verfahrensprinzip basierende neue lineare SiOC verknüpfte Siliconpolyetherstrukturen mit terminalen Hydroxylgruppen.

Überraschenderweise wurde nun gefunden, dass man SiOH Gruppen tragende Organosiloxane, also organomodifizierte Kieselsäurederivate, die für ihre Kondensationsneigung, Basen- und Säurelabilität bekannt sind, in vorteilhafter und einfacher Weise unter Einsatz bekannter Doppelmetallcyanidkatalysatoren, auch als DMC-Katalysatoren bekannt, direkt alkoxylieren kann.

Bisher werden Alkoxylierungen mittels DMC-Katalyse ausschließlich an Kohlenstoff-gebundene Hydroxylgruppen, also an Kettenstarter wie Alkohole, Phenole und Carbonsäuren durchgeführt. Auf Grund ihrer Hydrolyseempfindlichkeit sind Siloxanole bislang nur sehr eingeschränkt Alkoxylierungsreaktionen zugänglich, da es besonders im basischen und sauren Medium, also vor allem in Gegenwart der nach Stand der Technik für die Alkoxylierungsreaktion mit Alkylenoxiden wie Ethylenoxid oder Propylenoxid eingesetzten Katalysatoren wie Alkalihydroxiden und Säuren, zu Umlagerungen des Siloxangerüsts, Kondensationsreaktionen und Homopolymerisationen kommt.

Mit dem erfindungsgemäß beanspruchten Verfahren erschließt sich erstmals und in einfacher Weise die Möglichkeit der von einem SiOH funktionellen Starter mit reaktivem Wasserstoff. ausgehenden DMC-katalysierten alkoxylierenden Polymerisation von Epoxidgruppen tragenden Monomeren wie Alkylenoxiden zu linearen, kettenendständig OH-funktionellen Siliconpolyethern.

Das erfindungsgemäß beanspruchte Verfahren gewährt die synthetische Flexibilität, neben Alkylenoxiden weitere epoxid-funktionelle Monomere wie Glycidylverbindungen sowie bei Bedarf weitere Typen von Monomeren sowohl terminal, isoliert, blockartig kumuliert als aber auch statistisch verteilt in die Polymerkette eines Siliconpolyethers einzubauen. Anders als die über die Chlorsiloxan- und Wasserstoffsiloxanroute zugänglichen Produkte enthalten die nach erfindungsgemäßem Verfahren herstellbaren Produkte endständige Hydroxylgruppen. Ferner ermöglicht das erfindungsgemäße Verfahren den Zugang zu neuen ebenfalls erfindungsgemäßen Polyethersiloxane enthaltenden Alkoxylierungsprodukten, deren strukturelle Vielfalt bzgl. des Aufbaus der Polyetherketten nicht durch die aus US 5,175,327 bekannten vorgenannten Limitierungen in der Polyetherkette und außerdem Propylenoxid als Startmonomer) begrenzt ist.

Die im Rahmen der Erfindung einsetzbaren organomodifizierten α,ω-Dihydroxysiloxane werden meist durch kontrollierte Hydrolyse von Chlorsilanen gewonnnen und sind im industriellen Maßstab erhältlich. Derart gewonnene SiOH funktionelle Siloxanverbindungen sind dank ihrer am Si-Atom gebundenen reaktiven Hydroxylgruppen wertvolle Synthesebausteine und Zwischenprodukte für verschiedene Folgeumsetzungen. Besonders verbreitet sind SiOH-terminierte Polydimethylsiloxanole, die zum Beispiel unter Wasserabspaltung höhermolekulare Polydimethylsiloxanstrukturen ausbilden können.

Die für das erfindungsgemäß beanspruchte Verfahren eingesetzten Doppelmetallcyanidkatalysatoren (DMC-Katalysatoren) sind in ihrer Herstellung und Verwendung als Alkoxylierungskatalysatoren seit den 1960er Jahren bekannt und werden zum Beispiel in US-3,427,256, US-3,427,334, US-3, 427, 335, US-3,278,457, U S-3, 278, 458 oder US-3,278,459 dargestellt. Unter den in den Folgejahren weiter entwickelten und z.B. in US-5,470,813 und US-5,482,908 beschriebenen, immer wirksameren Typen von DMC-Katalysatoren befinden sich im speziellen Zink-Cobalt-Hexacyanokomplexe. Dank ihrer außerordentlich hohen Aktivität werden zur Herstellung von Polyetherolen nur geringe Katalysatorkonzentrationen benötigt, so dass auf die für konventionelle alkalische Katalysatoren notwendige Aufarbeitungsstufe - bestehend aus der Neutralisation, der Fällung und der Abfiltration des Katalysators - am Ende des Alkoxylierungsprozesses verzichtet werden kann. Auf die hohe Selektivität der DMC-katalysierten Alkoxylierung ist zurückzuführen, dass zum Beispiel Propylenoxid-basierende Polyether nur sehr geringe Anteile ungesättigter Nebenprodukte enthalten.

Mit dem vorliegenden erfindungsgemäßen Verfahren gelingt es erstmals, die geschilderten Vorteile der DMC-Katalyse auf die neuartige Alkoxylierung von SiOH-funktionellen Startverbindungen zu übertragen. Als Kettenstarter in der DMC-katalysierten Alkoxylierung nach dem erfindungsgemäßen Verfahren eignen sich die organomodifizierten α,ω-Dihydroxysiloxane der allgemeinen Formel (I), 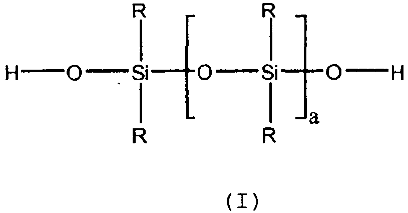 wobei
- R: einem oder mehreren gleichen oder verschiedenen linearen oder verzweigten, gesättigten, einfach oder mehrfach ungesättigten Alkylresten mit 1 bis 20, insbesondere 1 bis 10 Kohlenstoffatomen entspricht, und
- a: eine ganze Zahl von 0 bis 5.000, bevorzugt 2 bis 5.000, besonders bevorzugt von 2 bis 4.000 ist und insbesondere 9 bis 3.000.

Vorzugsweise entspricht R in Formel (I) einem Methylrest.

Vor allem kurzkettige kommerziell erhältliche α,ω-Dihydroxysiloxane gemäß Formel (I) können durch Kondensation entstandene cyclische Siloxanspezies wie Octamethylcyclotetrasiloxan und Decamethylcyclopentasiloxan als Nebenbestandteile enthalten. Diese Siloxancyclen tragen keine reaktiven SiOH-Gruppen, verhalten sich also im Sinne der erfindungsgemäßen Alkoxylierungsreaktion in Gegenwart von DMC-Katalysatoren inert. Je nach Bedarf oder Anwendungsgebiet der angestrebten Alkoxylierungsprodukte können solche ggfs. enthaltenen cyclischen Siloxanverbindungen entweder im System verbleiben oder z.B. durch eine einfache Vakuumdestillation ganz oder teilweise entfernt werden. Die Abdestillation cyclischer Siloxanspezies kann dabei wahlweise vor der Alkoxylierung oder nach Beendigung der Alkoxylierung erfolgen.

Insbesondere kurzkettige großtechnisch hergestellte α,ω-Dihydroxysiloxane der Formel (I) können geringe Konzentrationen von Wasser als weiteres typisches Kondensationsprodukt enthalten. Sollte die Wasserkonzentration außergewöhnlich hohe Werte von z.B. über 1 % im α,ω-Dihydroxysiloxan erreichen, kann es von Vorteil sein, Wasser zumindest teilweise per Vakuumdestillation vor der DMC-Katalysatorzugabe und vor dem Start der Alkoxylierung aus dem Siloxanol-Starter zu entfernen, da es sich inhibierend auf die katalytische Aktivität des Doppelmetallcyanids auswirken kann.

Bei den im Rahmen der Erfindung besonders bevorzugten α,ω-Dihydroxysiloxanen mit a>9 gemäß Formel (I) sind sowohl cyclische Siloxannebenkomponenten als auch Wasser in so geringen Konzentrationen enthalten, dass es keiner destillativen oder andersartigen Aufreinigung des Siloxanols bedarf.

Der Stand der Technik referiert verschiedene Alkoxylierungsverfahren, die sich der Katalyse mit Doppelmetallcyanid-Katalysatoren bedienen. Als Referenz sei hier z. B. a u f EP-A1-1017738, US-5,777,177, EP-A1-0981407, WO-2006/002807 und EP-A-1474464 verwiesen.

Überraschenderweise wurde gefunden, dass nicht nur konventionelle Starter mit Kohlenstoff-gebundener OH-Funktion wie Alkohole (z.B. Butanol, Allylalkohol, Octanol, Dodecanol, Dipropylenglykol, Glycerin), Phenole oder Carbonsäuren mit Alkylenoxiden wie z.B. Ethylenoxid, Propylenoxid und 1,2-Butylenoxid alkoxyliert werden können, sondern auch die Gruppe der SiOH funktionellen Verbindungen, die sich durch das Vorhandensein mindestens einer Si-ständigen OH-Funktion auszeichnen, als Kettenstarter für die Alkoxylierung eingesetzt werden können, und zwar ohne die in US 5,175,327 beschriebenen Einschränkungen und Nachteile. Die Alkoxylierungstechnologie erfährt durch das neue erfindungsgemäße DMCkatalysierte Verfahren einen großen Zuwachs an Flexibilität beim Aufbau neuer linearer, OH-terminierter Polyethersiloxanstrukturen und ermöglicht es, eine große Klasse von SiOC-verknüpften Siloxan-Polyether-Copolymeren in nur einem einzigen einfachen Verfahrensschritt herzustellen.

Die für ihre Alkali- und Säureempfindlichkeit bekannten α,ω-Dihydroxysiloxane der Formel (I) werden nach erfindungsgemäßem Verfahren in Gegenwart von DMC-Katalysatoren auf einfache Weise unter schonenden, weder basischen noch sauren Bedingungen alkoxyliert, so dass das durch den jeweiligen Siloxanolstarter vorgegebene Siloxangerüst hinsichtlich Kettenlänge und Linearität erhalten bleibt. Die in der Synthese eingesetzten Konzentrationen an DMC-Katalysator sind so gering, dass sich dieser im Endprodukt löst, daher also nicht aus dem gebildeten Alkoxylierungsprodukt entfernt werden muss und die Produkteigenschaften nicht erkennbar beeinträchtigt. Weder entstehen bei dem erfindungsgemäßen Herstellprozess Salze als ungewünschte Koppelprodukte, noch ist eine Aufarbeitungs- oder Reinigungsstufe nach Abschluss der Alkoxylierungsreaktion erforderlich. Mit dem Verfahren gelingt es, die von den Doppelmetallcyanid-Systemen bekannten Vorteile einer hohen Reaktionsgeschwindigkeit und des Verzichts auf die Katalysatordeaktivierung und - abtrennung zu erhalten und den Einsatzbereich der DMC-Technologie auf die Alkoxylierung von organomodifizierten Kieselsäurederivaten auszudehnen.

Erfindungsgemäß können als Startverbindungen für die DMCkatalysierte Alkoxylierungsreaktion alle Verbindungen der Formel (I) allein oder in Mischungen miteinander eingesetzt werden. Auch eine Kombination von α,ω-Dihydroxysiloxanen der Formel (I) mit herkömmlichen Startverbindungen wie mono- und polyfunktionellen Alkoholen, Polyetherolen oder Phenolen ist möglich.

Es ist das Ziel, ein universelles Alkoxylierungsverfahren bereit zu stellen, dass es durch den flexiblen Einsatz von Alkylenoxiden wie Ethylenoxid, Propylenoxid, Butylenoxid und/oder weiteren Alkylenoxiden aber auch Glycidylverbindungen und weiteren Comonomeren gestattet, eine Vielfalt von neuen Polyethersiloxanstrukturen gemäß Formel (VII) mit in weiten Grenzen variabler Monomerabfolge aufzubauen.

Unter Startverbindungen werden im Rahmen der vorliegenden Erfindung Substanzen verstanden, die den Anfang (Start) des herzustellenden Polyethermoleküls bilden, das durch die erfindungsgemäße Anlagerung von epoxidfunktionellen Monomeren der Formeln (II) und (III) erhalten wird. Die in dem erfindungsgemäßen Verfahren eingesetzte Startverbindung ist vorzugsweise ausgewählt aus der Gruppe der α,ω-Dihydroxysiloxane gemäß Formel (I). Die Startverbindungen können allein oder auch in Mischung miteinander eingesetzt werden. Auch eine Kombination von α,ω-Dihydroxysiloxanen der Formel (I) mit herkömmlichen Startverbindungen wie mono- und polyfunktionellen Alkoholen, Polyetherolen oder Phenolen ist möglich. Bevorzugt werden jedoch ausschließlich organomodifizierte α,ω-Dihydroxysiloxane entsprechend Formel (I) beim Start der Alkoxylierung verwendet.

Als SiOH-funktionelle Startverbindungen (I) werden vorzugsweise Polydimethylsiloxanole mit zwei terminalen Hydroxylgruppen und mit mittleren Molmassen von 100 bis 400.000 g/mol, insbesondere 200 bis 300.000 g/mol, ganz besonders bevorzugt 700 bis 250.000 g/mol eingesetzt.

Die α,ω-Dihydroxysiloxane gemäß Formel (I) können bei der DMC-katalysierten Alkoxylierung zur Herstellung von Siliconpolyethern nach erfindungsgemäßem Verfahren mit Alkylenoxiden der allgemeinen Formel (II) umgesetzt werden, 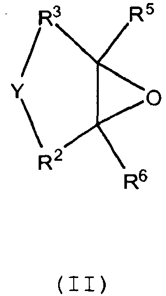 mit R² oder R³, sowie R⁵ oder R⁶ gleich oder auch unabhängig voneinander H oder ein gesättigter oder gegebenenfalls einfach oder mehrfach ungesättigter, auch weiter substituierter, gegebenenfalls ein- oder mehrwertiger Kohlenwasserstoffrest, wobei für die Reste R⁵ oder R⁶ gilt, dass sie gleich einem einwertigen Kohlenwasserstoffrest sind. Der Kohlenwasserstoffrest kann cycloaliphatisch über das Fragment Y verbrückt sein; Y kann nicht vorhanden sein, oder aber eine Methylenbrücke mit 1 oder 2 Methyleneinheiten sein, ist Y gleich 0, so sind R² oder R³ unabhängig voneinander gleich ein linearer oder verzweigter Rest mit 1 bis 20, bevorzugt 1 bis 10 Kohlenstoffatomen, besonders bevorzugt ein Methyl-, Ethyl-, Propyl- oder Butyl-, Vinyl-, Allylrest oder Phenylrest. Vorzugsweise ist zumindest einer der beiden Reste in Formel (II) R² oder R³ Wasserstoff. Besonders bevorzugt werden als Alkylenoxide Ethylenoxid, Propylenoxid, 1,2- oder 2,3-Butylenoxid, Isobutylenoxid, 1,2-Dodecenoxid, Styroloxid, Cyclohexenoxid (hier ist R²-R³ eine -CH₂CH₂CH₂CH₂-Gruppe, Y damit -CH₂CH₂-) oder Vinylcyclohexenoxid oder deren Mischungen eingesetzt. Die Kohlenwasserstoffreste R² und R³ gemäß Formel (II) können ihrerseits weiter substituiert sein und funktionelle Gruppen wie Halogene, Hydroxylgruppen oder Glycidyloxypropylgruppen tragen. Zu solchen Alkylenoxiden gehören Epichlorhydrin und 2,3-Epoxy-1-propanol. Die Monomere der Formel (II) können dabei in beliebiger Dosierreihenfolge nacheinander oder im Gemisch zugefügt werden.

Ebenfalls können Glycidylverbindungen wie Glycidylether und/oder Glycidylester der allgemeinen Formel (III), 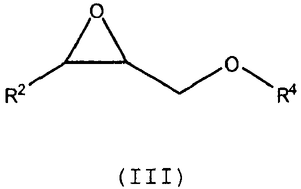 bei denen mindestens eine Glycidyloxypropylgruppe über eine Ether- oder Esterfunktion R⁴ an einen linearen oder verzweigten Alkylrest von 1 bis 24 Kohlenstoffatomen, einen aromatischen oder cycloaliphatischen Rest gebunden ist, einzeln, im Gemisch oder in Kombination mit den in Formel (II) dargestellten Alkylenoxiden verwendet werden. Zu dieser Klasse von Verbindungen gehören zum Beispiel Allyl-, Butyl-, 2-Ethylhexyl-, Cyclohexyl-, Benzyl-, C₁₂/C₁₄-Fettalkohol-, Phenyl-, p-tert.-Butylphenyl- oder o-Kresylglycidylether. Bevorzugt eingesetzte Glycidylester sind zum Beispiel Glycidylmethacrylat, Glycidylacrylat oder Neodecansäureglycidylester. Ebenso einsetzbar sind polyfunktionelle Epoxidverbindungen wie zum Beispiel 1,2-Ethyl-, 1,4-Butyl- oder 1,6-Hexyldiglycidylether.

Die Epoxidverbindungen der Formeln (II) und (III) können wahlweise blockartig oder statistisch an einen oder mehrere Kettenstarter der Formel (I) mit mindestens einer reaktiven SiOH-Gruppe addiert werden.

Neben Epoxidgruppen tragenden Monomeren können unter den Bedingungen der DMC-katalysierten Alkoxylierung auch andere Monomere als Epoxidmonomere verwendet werden, dazu zählen neben Lactonen, gesättigten, ungesättigten oder aromatischen cyclischen Dicarbonsäureanhydriden, auch Kohlendioxid allein oder in beliebigen Mischungen miteinander.

Als Lactone der Formel (IV) können beispielsweise eingesetzt werden, 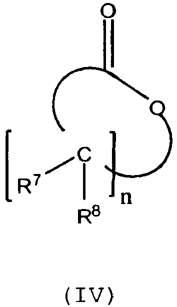 wobei n eine ganze Zahl von 2 bis 8 ist und R⁷ und R³ unabhängig voneinander entweder Wasserstoff, Alkyl-, Alkoxy-, Aryl- oder Aralkylgruppen darstellen, unter Ringöffnungspolymerisation zu Estergruppen enthaltenden Polyethersiloxanen copolymerisiert werden. Als geeignete Lactone können in dem Zusammenhang beispielsweise ε-Caprolacton, 5-Valerolacton und γ-Butyrolacton sowie Gemische verschiedener Lactone verwendet werden. Bevorzugt ist die Verwendung von ε-Caprolacton als Comonomer. Während des Alkoxylierungsprozesses können die jeweiligen Epoxid- und Lactonmonomere in beliebiger Reihenfolge und variabler Menge nacheinander oder zeitlich parallel zu Polyetherester-Copolymeren mit blockartiger oder statistisch verteilter Sequenz der einzelnen Monomerbausteine copolymerisiert werden.

Alternativ oder zusätzlich zu Lactonen können auch gesättigte, ungesättigte oder aromatische cyclische Dicarbonsäureanhydride gemäß den Formeln (V) und (VI) als Comonomere neben den Epoxidgruppen tragenden Monomeren gemäß der Formeln (II) und (III) unter den Bedingungen der DMC-katalysierten Alkoxylierung eingesetzt werden, 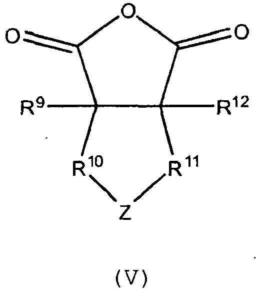 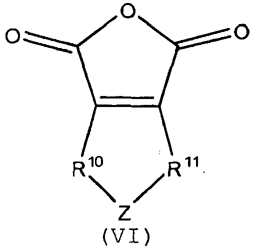 wobei R⁹, R¹⁰, R¹¹ und R¹² unabhängig voneinander entweder Wasserstoff, Alkyl-, Alkenyl-, Alkoxy-, Aryl- oder Aralkylgruppen darstellen. Der Kohlenwasserstoffrest kann cycloaliphatisch oder aromatisch über das Fragment Z verbrückt sein, wobei Z sowohl einen divalenten Alkylenals auch Alkenylenrest darstellen kann. Bevorzugt eingesetzte cyclische Anhydride sind Bernsteinsäureanhydrid, Oct(en)yl-, Dec(en)yl- und Dodec(en)ylbernsteinsäueanhydrid, Maleinsäureanhydrid, Phthalsäureanhydrid, Hexahydro-, Tetrahydro-, Dihydro-, Methylhexahydro- und Methyltetrahydrophthalsäureanhydrid. Während des Alkoxylierungsprozesses können die jeweiligen Anhydridmonomere in beliebiger Reihenfolge und variabler Menge nacheinander oder zeitlich parallel zum Epoxidfeed unter Ringöffnung zu Siloxan-Polyetherester-Copolymeren copolymerisiert werden. Auch Mischungen von Anhydriden gemäß Formel (V) und (VI) sind einsetzbar.

Wird die erfindungsgemäße Alkoxylierung von α,ω-Dihydroxysiloxanen in Gegenwart von Kohlendioxid durchgeführt, gelingt die Herstellung carbonatgruppen-modifizierter Polyether bzw. Polyetherester durch Insertion von Kohlendioxid in die Polymerkette. Solche Umsetzungen finden bevorzugt in Autoklavreaktoren unter Überdruck und Kohlendioxidatmosphäre statt. Der Carbonatgehalt ist variabel und z.B. durch die Wahl der Temperatur- und Druckbedingungen während der Umsetzung steuerbar.

Das Verfahrensprinzip der DMC-katalysierten Alkoxylierungsreaktion beinhaltet, dass im ersten Schritt ein Startgemisch, bestehend aus mindestens einem α,ω-Dihydroxysiloxan Starter und dem Doppelmetallcyanidkatalysator, der gegebenenfalls zuvor in einem Suspendiermittel aufgeschlämmt wurde, im Reaktor vorgelegt wird. Dieser vorgelegten Mischung wird meist nur ein Teil der insgesamt zu dosierenden Menge an Epoxidmonomer zugefügt, um den DMC-Katalysator zu aktivieren. Das Ende dieser Initialisierungsphase wird beim Einsatz gasförmiger Epoxide wie Ethylenoxid oder Propylenoxid durch einen raschen Druckabfall im Autoklaven angezeigt. Nach erfolgter Katalysatoraktivierung kann weiteres Epoxidmonomer zudosiert werden. Dabei besteht die Option, z.B. mehrere Monomere gleichzeitig oder auch nacheinander blockartig zu addieren. Ferner besteht die Möglichkeit, während der Monomerdosierung weiteres α,ω-Dihydroxysiloxan oder andere OH-funktionelle Starter, die identisch mit den anfangs vorgelegten Startern aber auch chemisch unterschiedlich davon sein können, zu addieren.

Das erfindungsgemäße Verfahren lässt sehr flexibel verschiedene Ausführungsformen der Alkoxylierung von α,ω-Dihydroxysiloxanen mittels DMC-Katalysatoren zu.

Als Starter dienen α,ω-Dihydroxysiloxane gemäß Formel (I), die sowohl einzeln als auch als Gemisch eingesetzt werden können. Der vorgelegten Startmischung aus mindestens einem Siloxandiol und dem DMC-Katalysator wird zumindest eine der Epoxidverbindungen gemäß Formel (II) oder (III) zu dosiert. Zum Starten der Alkoxylierungsreaktion und zur Aktivierung des Doppelmetallcyanid-Katalysators wird zunächst meist nur ein Teil der insgesamt zu dosierenden Menge an Epoxid zugefügt. Bevorzugt wird hierfür ein Alkylenoxid gemäß Formel (II), besonders bevorzugt Propylenoxid oder 1,2-Butylenoxid eingesetzt. Das molare Verhältnis von Epoxid zu den reaktiven Gruppen des Starters, insbesondere den SiOH-Gruppen im Startgemisch, liegt in der Startphase dabei vorzugsweise bei 0,1 bis 100 zu 1, bevorzugt bei 0, bis 60 zu 1, insbesondere bei 0,4 bis 50 zu 1. Nach der Startphase, also nach Initialisierung der Reaktion, werden je nach angestrebter Molmasse und Molekülstruktur entweder gleichzeitig weitere Startverbindung der Formel (I) und weiteres Epoxid oder nur weiteres Epoxid, gegebenenfalls auch weitere Monomere gemäß Formel (IV), (V) oder (VI) sowie Kohlendioxid, zudosiert. An Stelle oder zusätzlich zur weiteren Siloxanol-Zugabe während der Monomeraddition können auch andere OH-funktionelle Startverbindungen wie Alkohole, Polyetherole oder Phenole sowie die nach erfindungsgemäßem Verfahren gewonnen OHterminierten Polyethersiloxane/Siliconpolyether gemäß Formel (VII) zugeführt werden, um so komplexe Mischungen von Alkoxylierungsprodukten zu erhalten. Werden als Starter ausschließlich α,ω-Dihydroxysiloxane des Typs (I), evtl. ergänzt um einen Zusatz bereits zuvor hergestellter Polyethersiloxane gemäß Formel (VII) verwendet, erhält man die bevorzugten erfindungsgemäßen linearen Polyethersiloxane. Unabhängig von der Wahl der Starter können die unterschiedlichen Epoxide der Formeln (II) und (III) einzeln, im beliebigen Gemisch als auch in Kombination mit Lactonen (IV) oder cyclischen Anhydriden (V), (VI) sowie zusammen mit Kohlendioxid addiert werden. Die Umsetzung kann z.B. zwecks Viskositätserniedrigung des Reaktionsgemisches in einem - in Bezug auf die Alkylierungsreaktion - inerten Lösemittel durchgeführt werden. Als inerte Lösungsmittel eignen sich beispielsweise aliphatische oder aromoatische Ether, Kohlenwasserstoffe, insbesondere Toluol, Xylol oder Cyclohexan.

Ein Siloxandiol oder mehrere α,ω-Dihydroxysiloxane der Formel (I) können alternativ zusammen mit den zuvor nach erfindungsgemäßem Verfahren aus α,ω-Dihydroxysiloxanen hergestellten, die Polyethersiloxane der Formel (VII) enthaltenden Alkoxylierungsprodukten vorgelegt und nach dem vorgenannten Verfahrensprinzip der DMC-Katalyse im Gemisch alkoxyliert werden.

Ferner ist es möglich, die durch Alkoxylierung von α,ω-Dihydroxysiloxanen der Formel (I) gewonnenen Alkoxylierungsprodukte, bestehend aus Polyethersiloxanen der Formel (VII) als Starter zu verwenden, und erst nach erfolgter Initialisierung des DMC-Katalysators parallel zur Monomerzugabe eine oder mehrere Siloxanolverbindungen gemäß Formel (I) zu addieren.

Die Alkoxylierung mittels DMC-Katalyse kann auch ausgehend von Mischungen der α,ω-Dihydroxysiloxane gemäß Formel (I) mit ein- oder mehrfunktionellen, gesättigten oder ungesättigten, linearen oder verzweigten Alkoholen, aber auch Polyetherolen, die bevorzugt ihrerseits durch eine Alkoxylierungsreaktion hergestellt wurden, oder Phenolen, die gegebenfalls substituiert sein können, durchgeführt werden. So werden in einem Reaktionschritt Mischungen aus Polyethersiloxanen mit Polyetherolen erhalten. Zusätzlich zu den α,ω-Dihydroxysiloxanen können dabei auch die hydroxyterminierten erfindungsgemäßen Polyethersiloxane der Formel (VII) als Starter vorgelegt werden.

Beim Einsatz von Mischungen unterschiedlicher Starter sind deren Mischungsverhältnis und deren Dosierreihenfolge beliebig variierbar. Es ist ferner möglich, vor der Zugabe des Epoxids zur Initialisierung der Reaktion gegebenenfalls vorhandene, die Reaktion inhibierende Stoffe aus dem Reaktionsgemisch z.B. durch Destillation oder gemäß der Lehre von WO-98/52689 durch Strippen zu entfernen. Vorzugsweise wird jedoch auf eine Destillation und Strippen verzichtet, wenn das Startgemisch niedermolekulare und daher niedrig siedende Siloxanolkomponenten enthält.

Das Starten der exothermen Reaktion kann z.B. durch eine Druck- und/oder Temperaturüberwachung detektiert werden. Ein plötzlicher Abfall des Drucks im Reaktor zeigt bei gasförmigen Alkylenoxiden an, dass das Alkylenoxid eingebaut wird, die Reaktion somit gestartet und das Ende der Startphase erreicht ist. Die Dauer der Startphase und die für die Aktivierung des DMC-Katalysators benötigte Menge an Epoxidmonomer kann je nach Art und Menge des eingesetzten Siloxanolstarters bzw. der Zusammensetzung der Startmischung variieren, da die kommerziell erhältlichen α,ω-Dihydroxysiloxane zum Teil und in unterschiedlichen Konzentrationen Wasser enthalten, welches das Anspringen der Reaktion verzögern kann. Bei hohem Wassergehalt des Siloxanolstarters kann es von Vorteil sein, nur eine kleine Menge des insgesamt benötigten Siloxanols samt DMC-Katalysator im Reaktor vorzulegen und nach erfolgreicher Initiierung der Reaktion nach Zugabe von z.B. Propylenoxid oder 1,2-Butylenoxid als Startmonomer die weitere, restliche Siloxanolmenge parallel zum Monomerfeed kontinuierlich zuzuspeisen. Auch die gemeinsame Vorlage eines Gemischs aus Siloxanol und einem zuvor hergestellten erfindungsgemäßen Polyethersiloxan begünstigt in Fällen höheren Wassergehalts ein rasches Anspringen der Alkoxylierungsreaktion. Eine destillative teilweise Entfernung des Wassers begünstigt in manchen Fällen ebenfalls das rasche Anspringen der DMC-katalysierten Alkoxylierungsreaktion.

Als Suspensionsmittel für den DMC-Katalysator können zum Beispiel inerte Lösungsmittel benutzt werden oder vorteilhaft auch eine oder mehrere Startverbindungen gemäß Formel 1 (I) oder Polyethersiloxane entsprechend Formel (VII) oder alternativ Gemische aus den genannten Komponenten.

Bei der Herstellung der erfindungsgemäßen Produkte beträgt das molare Verhältnis der Summe der dosierten Epoxide, inklusive der bereits in der Startphase zugefügten Epoxide, bezogen auf die eingesetzte Startverbindung, insbesondere bezogen auf die Anzahl der SiOH-Gruppen der eingesetzten Startverbindung, dabei vorzugsweise 1 bis 10⁴ zu 1, insbesondere 1 bis 10³ zu 1.

Die Anlagerung der Monomere geschieht vorzugsweise bei einer Temperatur von 60 bis 250 °C, besonders bevorzugt bei einer Temperatur von 90 bis 160 °C. Der Druck, bei dem die Alkoxylierung stattfindet, beträgt vorzugsweise 0,02 bar bis 100 bar, besonders bevorzugt 0,05 bis 20 bar und insbesondere von 0,2 bis 5 bar absolut. Durch die Durchführung der Alkoxylierung bei Unterdruck kann die Reaktion sehr sicher durchgeführt werden. Gegebenenfalls kann die Alkoxylierung in Gegenwart eines Inertgases (z.B. Stickstoff) durchgeführt werden.

Nach der Monomer-Addition und eventueller Nachreaktion zur Vervollständigung des Monomerumsatzes werden evtl. vorhandene Reste von nicht abreagiertem Monomer und eventuell weiteren leicht flüchtigen Bestandteilen, üblicherweise durch Vakuumdestillation, Gasstrippen oder andere Methoden der Desodorierung entfernt. Sollte der verwendete Siloxanolstarter cyclische Siloxankomponenten in das System eingebracht haben, so können diese z.B. an dieser Stelle im Prozess einfach destillativ entfernt werden. Die Entfernung leicht flüchtiger Nebenkomponenten kann sowohl batchweise als auch kontinuierlich erfolgen. Beim erfindungsgemäßen Verfahren auf Basis der DMC-Katalyse kann im Normalfall auf eine Filtration verzichtet werden.

Die Verfahrensschritte können bei identischen oder verschiedenen Temperaturen ausgeführt werden.

Als DMC-Katalysator können alle bekannten DMC-Katalysatoren, vorzugsweise solche, die Zink und Kobalt aufweisen, bevorzugt solche, die Zinkhexacyanocobaltat(III) aufweisen, eingesetzt werden. Vorzugsweise werden die in US 5,158,922, US 20030119663, WO 01/80994 oder in den oben genannten Schriften beschriebenen DMC-Katalysatoren eingesetzt. Die Katalysatoren können amorph oder kristallin sein.

Im Reaktionsgemisch liegt die Katalysatorkonzentration vorzugsweise bei > (größer) 0 bis 5.000 wppm (Massenppm), bevorzugt bei > 0 bis 1.000 wppm, besonders bevorzugt bei 1 bis 500 wppm. Diese Konzentration ist dabei bezogen auf die Gesamtmasse der entstehenden Alkoxylierungsprodukte.

Vorzugsweise wird der Katalysator nur einmal in den Reaktor dosiert. Die Katalysatormenge ist so einzustellen, dass eine ausreichende katalytische Aktivität für das Verfahren gegeben ist. Der Katalysator kann als Feststoff oder in Form einer Katalysatorsuspension dosiert werden. Wird eine Suspension verwendet, so eignet sich insbesondere der Starter der Formel (I) als auch ein durch Alkoxylierung erhaltenes Polyethersiloxan der Formel (VII) als Suspensionsmittel. Bevorzugt wird aber auf eine Suspendierung verzichtet.

Durch das erfindungsgemäße Verfahren werden gleichfalls erfindungsgemäße lineare, terminal OH-funktionelle Polyethersiloxane der Formel (VII) bereitgestellt, die sich dadurch auszeichnen, dass sie hinsichtlich Strukturaufbau und Molmasse gezielt und reproduzierbar hergestellt werden können. Insbesondere ermöglicht das erfindungsgemäße Verfahren damit den Zugang zu neuen Polyethersiloxan-Copolymeren, die im Gegensatz zu den konventionell über die Chlorsiloxan- oder Wasserstoffsiloxanroute hergestellten Produkten linear, endständig OH-funktionell sind.

Die Sequenz der Monomereinheiten kann in weiten Grenzen variabel gestaltet werden. Epoxidmonomere des Typs (II) oder (III) können beliebig blockartig aneinander gereiht oder statistisch in die Alkylenoxidkette oder Polyetherkette eingebaut sein. Die durch die Reaktion unter Ringöffnung der Reaktionskomponenten der Formeln (II) und (III) in die entstehende Polymerkette eingefügten Fragmente sind in ihrer Sequenz untereinander frei permutierbar.

Ein weiterer Gegenstand der Erfindung sind die nach dem erfindungsgemäßen Verfahren zugänglichen neuartigen Siliconpolyether, deren mannigfaltige Strukturvariationen durch Formel (VII) beschrieben sind, 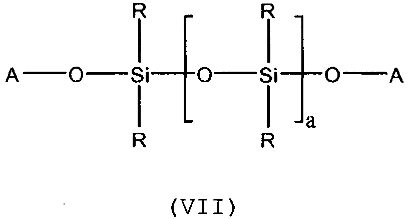 wobei A dem durch Formel (VIII) 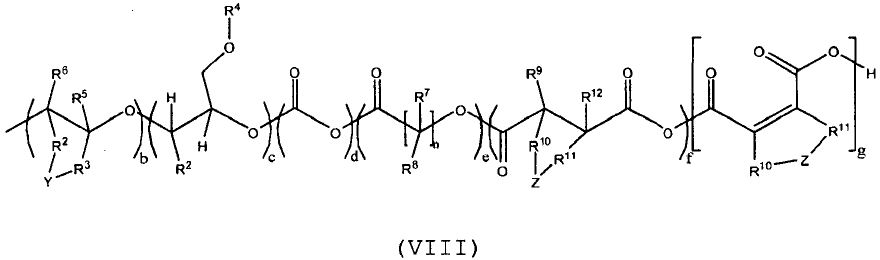 wiedergegebenen Polyetherfragment entspricht, und wobei die Substituenten R, R²-R¹² sowie die Reste Y und Z den zuvor für die Verbindungen der Formel (I), (II), (III), (IV), (V) und (VI) genannten Definitionen entsprechen, und
- n: eine ganze Zahl von 2 bis 8,
- a: eine ganze Zahl von 0 bis 5.000, bevorzugt 50 bis 5.000, besonders bevorzugt von 102 bis 4.000 ist und insbesondere 110 bis 4.000,
- b: eine ganze Zahl von 0 bis 1.000, bevorzugt 1 bis 500, besonders bevorzugt 1 bis 300 und insbesondere 1 bis 200 ist,
- c: eine ganze Zahl von 0 bis 500, bevorzugt 0 bis 200, besonders 0 bis 50,
- d: eine ganze Zahl von 0 bis 500, bevorzugt 0 bis 200, besonders bevorzugt 0 bis 100 und insbesondere 0 bis 70,
- e, f und g: ganze Zahlen von 0 bis 500, bevorzugt 0 bis 300, besonders bevorzugt 0 bis 200, insbesondere 0 bis 100 sind
mit der Maßgabe,
- 1.: dass die Fragmente mit den Indices b bis g untereinander frei permutierbar, d.h. in der Sequenz innerhalb der Polyetherkette gegeneinander austauschbar sind und
- 2.: die Fragmente mit den Indizes b, c und e wahlweise untereinander blockweise aneinandergereiht als auch statistisch verteilt vorliegen können und
- 3.: die Summe b + c + d + e + f + g größer Null ist und
- 4.: die Indices c bis g ungleich Null sind, wenn der Index b 1 bis 200 beträgt und gleichzeitig das Fragment mit dem Index b EO (Ethylenoxy-Gruppe) oder PO (Propylenoxy-Gruppe) entspricht oder
- 5.: wenn die Summe der Indices c bis g gleich Null ist und der Index b zwischen 1 und 200 liegt und die Fragmente EO- oder PO-Einheiten entsprechen, diese nicht statistisch verteilt in ihrer Abfolge vorliegen.

Bevorzugt sind solche Siliconpolyether, bei denen im Falle, dass a kleiner gleich 101 ist, die Summe von c + d + e + f + g ungleich Null ist.

Weiterhin bevorzugt sind Siliconpolyether, bei denen mindestens einer der Indices b bis g ungleich Null ist mit einer durchschnittlichen Molmasse von mindestens 8.000 g/mol und insbesondere größer 10.000 g/mol.

Die in den hier angeführten Formeln wiedergegebenen Indexzahlen und die Wertbereiche der angegebenen Indizes verstehen sich daher als die Mittelwerte der möglichen statistischen Verteilung der tatsächlichen vorhandenen Strukturen und/oder deren Mischungen. Dies gilt auch für als solche an sich exakt wiedergegebene Strukturformeln, wie beispielsweise für Formel (I), (VII) und (VIII).

Je nach Art des kettenendständigen Epoxidmonomers und der Regioselektivität der Epoxidringöffnung entstehen primäre, sekundäre oder tertiäre OH-Endgruppen. Durch ihre OH-Funktionalität unterscheiden sich die erfindungsgemäß hergestellten Produkte maßgeblich von den auf Basis von Chlor- bzw. Wasserstoffsiloxanen hergestellten Siliconpolyethern.

Das erfindungsgemäße Verfahren gestattet es, den Polymeraufbau der erfindungsgemäßen Polyethersiloxane je nach Art des Starters sowie Art, Menge und Abfolge der einsetzbaren Monomere auf mannigfaltige Weise zu variieren und so anwendungstechnisch wichtige Produkteigenschaften abhängig vom Verwendungszweck maßzuschneidern. Die grenzflächenaktiven Eigenschaften der Produkte, allgemein ihre Hydrophilie oder Hydrophobie, lassen sich durch Strukturvariationen in weiten Grenzen beeinflussen. Die nach erfindungsgemäßem Verfahren gewonnenen Polymere eignen sich daher beispielsweise als Polyurethanschaumstabilisatoren, Netzmittel, Dispergieradditive, Entlüfter oder Entschäumer. Auf Grund Ihrer terminalen Hydroxylgruppen stellen Sie im Gegensatz zu herkömmlichen Polyethersiloxanen reaktive Synthesebausteine für Folgeumsetzungen dar.

Als Reaktoren für die erfindungsgemäß beanspruchte Umsetzung können prinzipiell alle geeigneten Reaktortypen zum Einsatz kommen, die die Reaktion und ihre eventuell vorhandene Wärmetönung beherrschen lassen. Die Reaktionsführung kann in verfahrenstechnisch bekannter Art und Weise kontinuierlich, semi-kontinuierlich oder auch batchweise erfolgen und lässt sich flexibel auf die vorhandenen produktionstechnischen Einrichtungen abstimmen. Neben herkömmlichen Rührkesselreaktoren können auch Strahlschlaufenreaktoren mit Gasphase und internen Wärmetauscherrohren, wie in WO-01/062826 beschrieben, verwendet werden. Darüber hinaus können gasphasenfreie Loop-Reaktoren eingesetzt werden.

Bei der Dosierung der Edukte ist eine gute Verteilung der an der chemischen Umsetzung beteiligten Stoffe, d.h. der Epoxidmonomere, Starter, DMC-Katalysator und gegebenenfalls Suspensionsmittel.

Weitere Gegenstände der Erfindung werden durch die Ansprüche beschrieben.

Die erfindungsgemäßen Produkte und die entsprechenden Verfahren zu deren Herstellung werden nachfolgend beispielhaft beschrieben, ohne dass die Erfindung als auf diese beispielhaften Ausführungsformen beschränkt angesehen werden kann. Sind nachfolgend Bereiche, allgemeine Formeln oder Verbindungsklassen angegeben, so sollen diese nicht nur die entsprechenden Bereiche oder Gruppen von Verbindungen umfassen, die explizit erwähnt sind, sondern auch alle Teilbereiche und Teilgruppen von Verbindungen, die durch Herausnahmen von einzelnen Werten (Bereichen) oder Verbindungen erhalten werden können. Ausführungsbeispiele:

In den nachfolgend aufgeführten Beispielen wird die vorliegende Erfindung beispielhaft beschrieben, ohne dass die Erfindung, deren Anwendungsbreite sich aus der gesamten Beschreibung und den Ansprüchen ergibt, auf die in den Beispielen genannten Ausführungsformen beschränkt gelesen werden kann.

Herstellung von Siliconpolyethern nach erfindungsgemäßem Verfahren durch direkte Alkoxylierung organomodifizierter α,ω-Dihydroxysiloxane mit Hilfe von DMC-Katalysatoren. Die Kettenlänge der eingesetzten SiOH-funktionellen Starter wurde per ²⁹Si-NMR-Analysen bestimmt und wird durch den Index a gemäß Formel (I) beschrieben. Der Wassergehalt der α,ω-Dihydroxysiloxane wurde mittels Karl-Fischer-Methode ermittelt. Die mittleren Molmassen der Alkoxylierungsprodukte wurden per GPC-Analyse gegen Polystyrol als Standard und in Tetrahydrofuran als Lösemittel ermittelt. Die in den nachfolgend beschriebenen Experimenten als Starter eingesetzten Polydimethylsiloxandiole sind durch folgende analytische Kenndaten charakterisiert:

| | | |
|---|---|---|
| Siloxandiol 1: | a = 200 | Wassergehalt 0,02 Gew.-% |
| Siloxandiol 2: | a = 50 | Wassergehalt 0,02 Gew.-% |
| Siloxandiol 3: | a = 6,6 | Wassergehalt 1,1 Gew.-% |

### Beispiel 1:

In einem 3 Liter Autoklaven werden 185,0 g Siloxandiol 1 und 0,12 g Zinkhexacyanocobaltat-DMC-Katalysator unter Stickstoff vorgelegt und unter Rühren auf 130 °C aufgeheizt. Der Reaktor wird bis auf einen Innendruck von 30 mbar evakuiert, um evtl. vorhandene flüchtige Inhaltsstoffe destillativ zu entfernen. Zur Aktivierung des DMC-Katalysators wird eine Portion von 40,0 g Propylenoxid zugeführt. Nach 40 min und Anspringen der Reaktion (erfolgter Reaktorinnendruckabfall) werden weitere 330,0 g Propylenoxid kontinuierlich und unter Kühlen innerhalb von 45 min bei 130 °C und max. 0,6 bar Reaktorinnendruck (absolut) zudosiert. Nach 1 Stunde Nachreaktion bei 130 °C wird im Vakuum entgast, um evtl. flüchtige Anteile wie restliches Propylenoxid zu entfernen. Das gebildete viskose hochmolekulare Polyethersiloxan wird heiß (ca. 100 °C) aus dem Reaktor abgelassen.

Das Produkt ist nach Abkühlen auf Raumtemperatur trüb, wachsartig fest und hat eine gewichtsmittlere Molmasse M_{w} von ca. 44.400 g/mol, eine zahlenmittlere Molmasse Mₙ von ca. 32.000 g/mol sowie eine Polydispersität von 1,39.

### Beispiel 2:

In einem 3 Liter Autoklaven werden 300,0 g Siloxandiol 2 und 0,06 g Zinkhexacyanocobaltat-DMC-Katalysator unter Stickstoff vorgelegt und unter Rühren auf 130 °C aufgeheizt. Der Reaktor wird bis auf einen Innendruck von 30 mbar evakuiert, um evtl. vorhandene flüchtige Inhaltsstoffe destillativ zu entfernen. Zur Aktivierung des DMC-Katalysators wird eine Portion von 50,0 g Propylenoxid zugeführt. Nach 48 min und Anspringen der Reaktion werden weitere 250,0 g Propylenoxid kontinuierlich und unter Kühlen innerhalb von 90 min bei 130 °C und max. 0,8 bar Reaktorinnendruck (absolut) zudosiert. Nach 1 Stunde Nachreaktion bei 130 °C wird im Vakuum entgast, um evtl. flüchtige Anteile wie restliches Propylenoxid zu entfernen. Das gebildete Polyethersiloxan wird auf ca. 80 °C abgekühlt, dann aus dem Reaktor abgelassen.

Das Produkt ist nach Abkühlen auf Raumtemperatur trüb, niedrig viskos und hat eine gewichtsmittlere Molmasse M_{w} von ca. 12.250 g/mol, eine zahlenmittlere Molmasse Mₙ von ca. 9.050 g/mol sowie eine Polydispersität von 1,36.

### Beispiel 3:

Beispiel 2 wird wiederholt, wobei jedoch auf die destillative Entfernung von evtl. vorhandenen flüssigen Inhaltsstoffen vor der ersten Propylenoxiddosage verzichtet wird. Die Aktivierungszeit bis zum Anspringen der Reaktion beträgt 30 min. Das Produkt ist nach Abkühlen auf Raumtemperatur trüb, niedrig viskos und hat eine gewichtsmittlere Molmasse M_{w} von ca. 11.350 g/mol, eine zahlenmittlere Molmasse Mₙ von ca. 8.800 g/mol sowie eine Polydispersität von 1,29.

### Beispiel 4:

In einem 3 Liter Autoklaven werden 300,0 g Siloxandiol 2 und 0,12 g Zinkhexacyanocobaltat-DMC-Katalysator unter Stickstoff vorgelegt und unter Rühren auf 130 °C aufgeheizt. Der Reaktor wird bis auf einen Innendruck von 30 mbar evakuiert, um evtl. vorhandene flüchtige Inhaltsstoffe destillativ zu entfernen. Zur Aktivierung des DMC-Katalysators wird eine Portion von 50,0 g Propylenoxid zugeführt. Nach 35 min und Anspringen der Reaktion werden weitere 850,0 g Propylenoxid kontinuierlich und unter Kühlen innerhalb von 55 min bei 130 °C und max. 0,6 bar Reaktorinnendruck (absolut) zudosiert. Nach 1 Stunde Nachreaktion bei 130 °C wird im Vakuum entgast, um evtl. flüchtige Anteile wie restliches Propylenoxid zu entfernen. Das gebildete Polyethersiloxan wird auf ca. 100 °C abgekühlt, dann aus dem Reaktor abgelassen.

Das hochmolekulare Produkt ist nach Abkühlen auf Raumtemperatur trüb, wachsartig und hat eine gewichtsmittlere Molmasse M_{w} von ca. 23.100 g/mol, eine zahlenmittlere Molmasse Mₙ von ca. 18.900 g/mol sowie eine Polydispersität von 1,22.

### Beispiel 5:

In einem 3 Liter Autoklaven werden 300,0 g Siloxandiol 2 und 0,09 g Zinkhexacyanocobaltat-DMC-Katalysator unter Stickstoff vorgelegt und unter Rühren auf 130 °C aufgeheizt. Der Reaktor wird bis auf einen Innendruck von 30 mbar evakuiert, um evtl. vorhandene flüchtige Inhaltsstoffe destillativ zu entfernen. Zur Aktivierung des DMC-Katalysators wird eine Portion von 40,0 g Propylenoxid zugeführt. Nach 40 min und Anspringen der Reaktion werden zunächst weitere 100,0 g Propylenoxid, danach 150,0 g 1,2-Butylenoxid, 150,0 g Ethylenoxid und nochmals 150,0 g Propylenoxid unter Kühlen bei 130 °C und max. 1,6 bar Reaktorinnendruck (absolut) zudosiert. Nach jedem Alkylenoxidblock wird eine Nachreaktionszeit von 30 min eingehalten. Nach der letzten Propylenoxiddosierung wird eine abschließende Nachreaktion von 1 Stunde bei 130 °C durchgeführt, danach das Reaktionsgemisch im Vakuum entgast, um evtl. flüchtige Anteile wie restliches Alkylenoxid zu entfernen. Das gebildete Polyethersiloxan wird auf ca. 100 °C abgekühlt, dann aus dem Reaktor abgelassen.

Das Produkt ist nach Abkühlen auf Raumtemperatur trüb und hat eine gewichtsmittlere Molmasse M_{w} von ca. 25.500 g/mol, eine zahlenmittlere Molmasse Mₙ von ca. 13.000 g/mol sowie eine Polydispersität von 1,97.

### Beispiel 6:

In einem 3 Liter Autoklaven werden 80,0 g Siloxandiol 3 und 0,3 g Zinkhexacyanocobaltat-DMC-Katalysator unter Stickstoff vorgelegt und unter Rühren auf 130 °C aufgeheizt. Der Reaktor wird bis auf einen Innendruck von 30 mbar evakuiert, um flüchtige Inhaltsstoffe (z.B. Wasser) teilweise destillativ zu entfernen. Zur Aktivierung des DMC-Katalysators wird eine Portion von 90,0 g Propylenoxid zugeführt. Nach 75 min und Anspringen der Reaktion werden gleichzeitig weitere 1110, 0 g Propylenoxid und über eine separate zweite Dosierleitung 210,0 g Siloxandiol 3 kontinuierlich und unter Kühlen innerhalb von 60 min bei 130 °C und max. 0,9 bar Reaktorinnendruck (absolut) zudosiert. Nach 90 min Nachreaktion bei 130 °C wird im Vakuum entgast, um evtl. flüchtige Anteile wie restliches Propylenoxid zu entfernen. Das gebildete Polyethersiloxan wird auf ca. 80 °C abgekühlt und aus dem Reaktor abgelassen.

Das niedrig viskose Produkt ist bei Raumtemperatur trüb, hat eine gewichtsmittlere Molmasse M_{w} von ca. 2.570 g/mol, eine zahlenmittlere Molmasse Mₙ von ca. 2.000 g/mol sowie eine Polydispersität von 1,29.

### Beispiel 7:

In einem 3 Liter Autoklaven werden 80,0 g Siloxandiol 3 und 0,3 g Zinkhexacyanocobaltat-DMC-Katalysator unter

Stickstoff vorgelegt und unter Rühren auf 130 °C aufgeheizt. Der Reaktor wird bis auf einen Innendruck von 30 mbar evakuiert, um flüchtige Inhaltsstoffe (z.B. Wasser) teilweise destillativ zu entfernen. Zur Aktivierung des DMC-Katalysators wird eine Portion von 80,0 g 1,2-Butylenoxid zugeführt. Nach 40 min und Anspringen der Reaktion werden weitere 218,0 g 1,2-Butylenoxid zugefügt. Nach einer Nachreaktion von 45 min werden 182,0 g Ethylenoxid kontinuierlich in 20 min bei 130 °C und unter Kühlen bei max. 0,6 bar Reaktorinnendruck (absolut) zudosiert. Nach 30 min Nachreaktion bei 130 °C wird im Vakuum entgast, um evtl. flüchtige Anteile wie restliches Alkylenoxid zu entfernen. Das gebildete Polyethersiloxan wird auf ca. 80 °C abgekühlt und aus dem Reaktor abgelassen.

Das niedrig viskose Produkt ist bei Raumtemperatur trüb, hat eine gewichtsmittlere Molmasse M_{w} von ca. 4.300 g/mol, eine zahlenmittlere Molmasse Mₙ von ca. 2.460 g/mol sowie eine Polydispersität von 1,75.

### Beispiel 8:

In einem 3 Liter Autoklaven werden 80,0 g Siloxandiol 3 und 0,3 g Zinkhexacyanocobaltat-DMC-Katalysator unter Stickstoff vorgelegt und unter Rühren auf 130 °C aufgeheizt. Der Reaktor wird bis auf einen Innendruck von 30 mbar evakuiert, um flüchtige Inhaltsstoffe (z.B. Wasser) teilweise destillativ zu entfernen. Zur Aktivierung des DMC-Katalysators wird eine Portion von 100,0 g 1,2-Butylenoxid zugeführt. Nach 70 min und Anspringen der Reaktion werden weitere 98,0 g 1,2-Butylenoxid zugefügt. Nach einer Nachreaktion von 45 min werden zuerst 95,0 g ε-Caprolacton, danach 240,0 g Propylenoxid kontinuierlich bei 130 °C und unter Kühlen bei max. 0,4 bar Reaktorinnendruck (absolut) zudosiert. Nach 60 min Nachreaktion bei 130 °C wird im Vakuum entgast, um evtl. flüchtige Anteile wie restliches Alkylenoxid zu entfernen. Das gebildete estermodifizierte Polyethersiloxan wird auf ca. 80 °C abgekühlt und aus dem Reaktor abgelassen.

Das niedrig viskose Produkt ist bei Raumtemperatur trüb, hat eine gewichtsmittlere Molmasse M_{w} von ca. 5.680 g/mol, eine zahlenmittlere Molmasse Mₙ von ca. 4.350 g/mol sowie eine Polydispersität von 1,31.

## Patentansprüche

1. Verfahren zur Alkoxylierung von SiOH-Gruppen tragenden Organosiloxanen mit einem oder mehreren Alkylenoxiden oder Epoxidmonomeren, **dadurch gekennzeichnet, dass** die Alkoxylierung in Gegenwart von Doppelmetallcyanidkatalysatoren stattfindet.

2. Verfahren zur Herstellung von Siliconpolyethern nach Anspruch 1 durch alkoxylierende Polymerisation von Epoxidmonomeren mit (Poly)Organosiloxanen ausgehend von mindestens einem SiOH-funktionellen Starter mittels DMC-Katalyse.

3. Verfahren der DMC-katalysierten Alkoxylierungsreaktion, wobei in einem ersten Schritt ein Startgemisch, bestehend aus mindestens einem α,ω-Dihydroxysiloxan Starter und dem Doppelmetallcyanidkatalysator, der gegebenenfalls zuvor in einem Suspendiermittel aufgeschlämmt wurde, in einem Reaktor vorgelegt wird,
in einem zweiten Schritt dieser vorgelegten Mischung nur ein Teil der insgesamt zu dosierenden Menge an Epoxidmonomer zugefügt wird, um den DMC-Katalysator zu aktivieren und nach dieser Initialisierungsphase weiteres Epoxidmonomer und gegebenenfalls weiteres α,ω-Dihydroxysiloxan zudosiert wird, **dadurch gekennzeichnet, dass** zur Alkoxylierung α,ω-Dihydroxysiloxane verwendet werden.

4. Verfahren nach zumindest einem der Ansprüche 1 bis 3, **dadurch gekennzeichnet, dass** als SiOHfunktioneller Starter ein oder mehrere organomodifizierte α,ω-Dihydroxysiloxane der allgemeinen Formel (I), 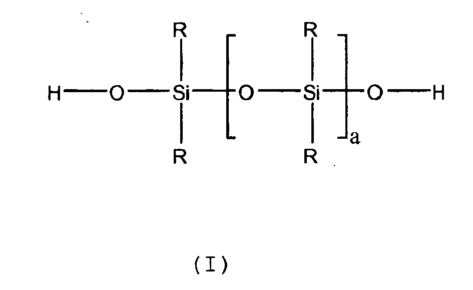 eingesetzt werden, wobei
R einem oder mehreren gleichen oder verschiedenen linearen oder verzweigten, gesättigten, einfach oder mehrfach ungesättigten Alkylresten mit 1 bis 20 Kohlenstoffatomen entspricht, und
a eine ganze Zahl von 0 bis 5.000 ist.

5. Verfahren nach Anspruch 4, **dadurch gekennzeichnet, dass** der Rest R in Formel (I) gleich Methyl ist.

6. Verfahren nach einem der Ansprüche 1 bis 5 **dadurch gekennzeichnet, dass** als SiOH-funktionelle Startverbindungen (I) eine oder mehrere Polydimethylsiloxane mit zwei terminalen Hydroxylgruppen und mit mittleren Molmassen von 100 bis 400.000 g/mol eingesetzt werden.

7. Verfahren nach zumindest einem der Ansprüche 1 bis 6, **dadurch gekennzeichnet, dass** die Epoxidmonomere terminal, isoliert, blockartig kumuliert oder statistisch verteilt in die Alkylenoxidkette des Siliconpolyethers eingebaut werden.

8. Verfahren nach zumindest einem der Ansprüche 1 bis 7, **dadurch gekennzeichnet, dass** ein oder mehrere Polydimethylsiloxane gemäß Formel (I) mit Epoxiden der Formeln (II) oder (III) oder mit einem Gemisch dieser Epoxide umgesetzt werden, wobei 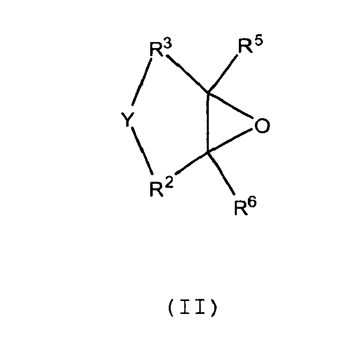 R² oder R³, sowie R⁵ oder R⁶ gleich oder auch unabhängig voneinander H oder ein gesättigter oder gegebenenfalls einfach oder mehrfach ungesättigter, auch weiter substituierter, gegebenenfalls ein- oder mehrwertiger Kohlenwasserstoffrest sind, wobei für die Reste R⁵ oder R⁶ gilt, dass sie gleich einem einwertigen Kohlenwasserst offrest sind und der Kohlenwasserstoffrest cycloaliphatisch über das Fragment Y verbrückt sein kann; Y kann nicht vorhanden sein, oder aber eine Methylenbrücke mit 1 oder 2 Methyleneinheiten sein, ist Y gleich 0, so sind R² oder R³ unabhängig voneinander gleich ein linearer oder verzweigter Rest mit 1 bis 20, die Kohlenwasserstoffreste R² und R³ gemäß Formel (II) können ihrerseits weiter substituiert sein und funktionelle Gruppen wie Halogene, Hydroxylgruppen oder Glycidyloxypropylgruppen tragen; oder 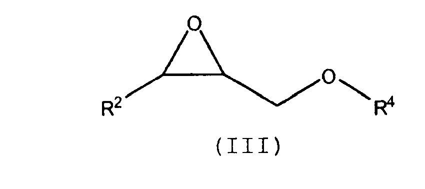 bei denen mindestens eine Glycidyloxypropyl-Gruppe über eine Ether- oder Esterfunktion R⁴ an einen linearen oder verzweigten Alkylrest von 1 bis 24 Kohlenstoffatomen, einen aromatischen oder cycloaliphatischen Rest gebunden ist, wahlweise blockartig oder statistisch an einen Kettenstarter der Formel (I) addiert.

9. Verfahren nach zumindest einem der Ansprüche 1 bis 8, **dadurch gekennzeichnet, dass** als Monomere Lactone, gesättigte, ungesättigte oder aromatische cyclische Dicarbonsäureanhydride, oder Kohlendioxid allein oder in beliebigen Mischungen miteinander verwendet werden.

10. Verfahren nach zumindest einem der Ansprüche 1 bis 9, **dadurch gekennzeichnet, dass** die Reaktion in einem oder in Mischungen mehrerer inerter Lösungsmittel durchgeführt wird.

11. Verfahren nach zumindest einem der Ansprüche 1 bis 10, **dadurch gekennzeichnet, dass** als Lösungsmittel oder Suspensionsmittel für den DMC-Katalysator der Starter der Formel (I) und/oder ein zuvor hergestellter Siliconpolyether der Formel (VII) verwendet wird.

12. Verfahren nach zumindest einem der Ansprüche 1 bis 11, **dadurch gekennzeichnet, dass** das molare Verhältnis von Epoxid zu den reaktiven Gruppen des Starters der Formel (I), insbesondere den OH-Gruppen im Startgemisch, in der Startphase bei 0,1 bis 100 zu 1 liegt.

13. Verfahren nach zumindest einem der Ansprüche 1 bis 12, **dadurch gekennzeichnet, dass** die Reaktion batchweise oder kontinuierlich erfolgt.

14. Verfahren nach zumindest einem der Ansprüche 1 bis 13, **dadurch gekennzeichnet, dass** die DMC-Katalysatorkonzentration bei > 0 bis 5.000 wppm bezogen auf die Gesamtmasse der entstehenden Alkoxylierungsprodukte liegt.

15. Verfahren nach Anspruch 14, **dadurch gekennzeichnet, dass** der Katalysator als Feststoff oder in Form einer Katalysatorsuspension dosiert wird.

16. Siliconpolyether der Formel (VII), 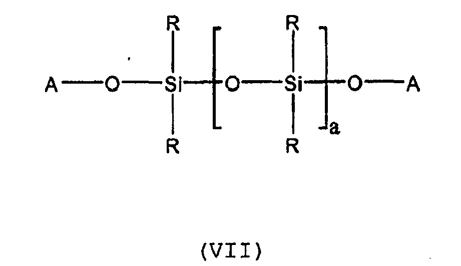 worin
R einem oder mehreren gleichen oder verschiedenen linearen oder verzweigten, gesättigten, einfach oder mehrfach ungesättigten Alkylresten mit 1 bis 20 Kohlenstoffatomen entspricht, und
a eine ganze Zahl von 0 bis 5.000 ist,
wobei A dem durch Formel (VIII) 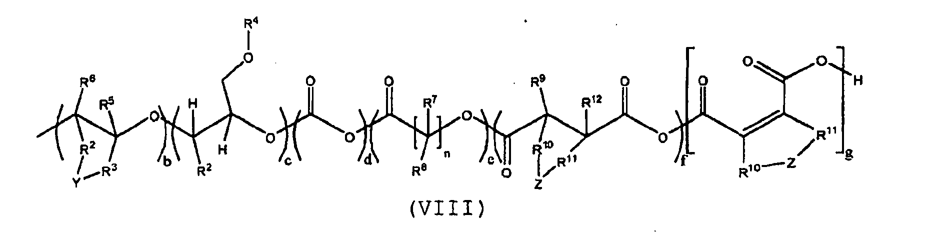 wiedergegebenen Polyetherfragment entspricht, in dem R² oder R³, sowie R⁵ oder R⁶ gleich oder auch unabhängig voneinander H oder ein gesättigter oder gegebenenfalls einfach oder mehrfach ungesättigter, auch weiter substituierter, gegebenenfalls ein- oder mehrwertiger Kohlenwasserstoffrest ist, wobei für die Reste R⁵ oder R⁶ gilt, dass sie gleich einem einwertigen
Kohlenwasserstoffrest sind und der Kohlenwasserstoffrest cycloaliphatisch über das Fragment Y verbrückt sein kann; Y kann nicht vorhanden sein, oder aber eine Methylenbrücke mit 1 oder 2 Methyleneinheiten sein, ist Y gleich 0, so sind R² oder R³ unabhängig voneinander gleich ein linearer oder verzweigter Kohlenwasserstoffrest mit 1 bis 20 Kohlenstoffatomen,
R⁴ eine Ether- oder Esterfunktion an einem linearen oder verzweigten Alkylrest von 1 bis 24 Kohlenstoffatomen, oder ein aromatischer oder cycloaliphatischer Rest,
n eine ganze Zahl von 2 bis 8 und
R⁷, R⁸, R⁹, R¹⁰, R¹¹ und R¹² unabhängig voneinander entweder Wasserstoff, Alkyl-, Alkoxy-, Aryl- oder Aralkylgruppen darstellen,
Z einem cycloaliphatischen oder aromatischen Fragment Z entspricht, wobei Z sowohl einen divalenten Alkylen- als auch Alltenylenrest darstellen kann,
a eine ganze Zahl von 0 bis 5.000 ist,
b eine ganze Zahl von 0 bis 1.000 ist,
c eine ganze Zahl von 0 bis 500 ist,
d eine ganze Zahl von 0 bis 500 ist, e, f und g ganze Zahlen von 0 bis 500 sind,
mit der Maßgabe,
a) dass die Fragmente mit den Indices b bis g untereinander frei permutierbar, d.h. in der Sequenz innerhalb der Polyetherkette gegeneinander austauschbar sind und
b) die Fragmente mit den Indizes b, c und e wahlweise untereinander blockweise aneinandergereiht als auch statistisch verteilt vorliegen können und
c) die Summe b + c + d + e + f + g > Null ist und
d) die Indices c bis g ungleich Null sind, wenn der Index b 1 bis 200 beträgt und gleichzeitig das Fragment mit dem Index b EO (Ethylenoxy-Gruppe) oder PO (Propylenoxy-Gruppe) entspricht oder
e) wenn die Summe der Indices c bis g gleich Null ist und der Index b zwischen 1 und 200 liegt und die Fragmente EO- oder PO-Einheiten entsprechen, diese nicht statistisch verteilt in ihrer Abfolge vorliegen.

17. Polyethersiloxane der Formel (VII) hergestellt nach einem der Verfahren gemäß den Ansprüchen 1 bis 15 mit dem proviso, dass Verbindungen der Formel 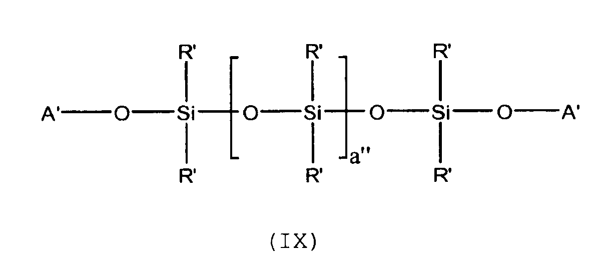 wobei R' eine Methylgruppe ist und A' gleich - (CH₂-CH₂-O)ₕ- (CH₂-CH(CH₃)O)ᵢ- (CH₂-CH₂-O)ⱼ-H ist und h, i, und j unabhängig voneinander Werte von 0 bis 200 annehmen können und die Polyethereinheiten h, i und j statistisch verteilt sind, nicht enthalten sind.

18. Polyethersiloxane nach Anspruch 17 mit dem proviso, dass Verbindungen der Formel (IX) mit der Summe aus h+i+j > 0 und a" gleich einer ganzen Zahl mit einem Wert von 1 bis 2.000 ist, nicht mitumfasst sind.

19. Verwendung von Polyethersiloxanen der Formel (VII) als Polyurethanschaumstabilisatoren, Netzmittel, Dispergieradditive, Entlüfter oder Entschäumer.

## Claims

1. Process for the alkoxylation of organosiloxanes bearing SiOH groups by means of one or more alkylene oxides or epoxide monomers, **characterized in that** the alkoxylation takes place in the presence of double metal cyanide catalysts.

2. Process for preparing silicone polyethers according to Claim 1 by alkoxylating polymerization of epoxide monomers with (poly)organosiloxanes starting from at least one SiOH-functional starter by means of DMC catalysis.

3. Process for the DMC-catalysed alkoxylation reaction, in which, in a first step, a starter mixture comprising at least one α,ω-dihydroxysiloxane starter and the double metal cyanide catalyst, which may, if appropriate, have previously been slurried in a suspension medium, is placed in a reactor,
in a second step, only part of the total amount of the epoxide monomer to be introduced is added to this initially charged mixture in order to activate the DMC catalyst and, after this initialization phase, further epoxide monomer and if appropriate further α,ω-dihydroxysiloxane are introduced, **characterized in that** α,ω-dihydroxysiloxanes are used for the alkoxylation.

4. Process according to at least one of Claims 1 to 3, **characterized in that** one or more organomodified α,ω-dihydroxysiloxanes of the general formula (I), 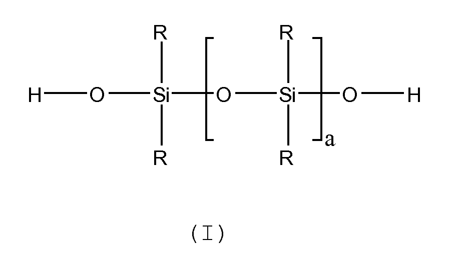 where
the radicals Rare identical or different linear or
branched, saturated, monounsaturated or polyunsaturated alkyl radicals having from 1 to 20 carbon atoms,
and
a is an integer from 0 to 5000,
are used as SiOH-functional starter.

5. Process according to Claim 4, **characterized in that** the radical R in formula (I) is methyl.

6. Process according to any of Claims 1 to 5, **characterized in that** one or more polydimethylsiloxanes having two terminal hydroxyl groups and an average molar mass of from 100 to 400 000 g/mol are used as SiOH-functional starter compounds (I).

7. Process according to at least one of Claims 1 to 6, **characterized in that** the epoxide monomers are incorporated terminally, in isolated positions, cumulated in blocks or randomly distributed into the alkylene oxide chain of the silicone polyether.

8. Process according to at least one of Claims 1 to 7, **characterized in that** one or more polydimethylsiloxanes of the formula (I) are reacted with epoxides of the formula (II) or (III) or with a mixture of these epoxides, 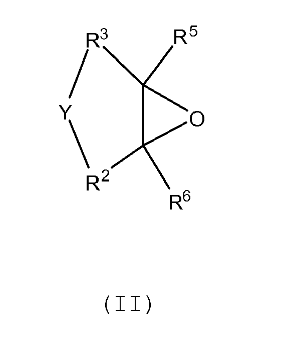 where
R² or R³ and R⁵ or R⁶ are identical or different and are each, independently of one another, H or a saturated or monounsaturated or polyunsaturated, monovalent or polyvalent hydrocarbon radical which may be further substituted, where the radicals R⁵ or R⁶ are each a monovalent hydrocarbon radical and the hydrocarbon radical can be cycloaliphatically bridged via the fragment Y; Y can be absent or be a methylene bridge having 1 or 2 methylene units, when Y is 0 then R² and R³ are each, independently of one another, a linear or branched radical having from 1 to 20 carbon atoms, the hydrocarbon radicals R² and R³ in the formula (II) can in turn be further substituted and bear functional groups such as halogens, hydroxyl groups or glycidyloxypropyl groups; or 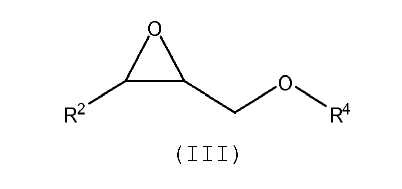 where at least one glycidyloxypropyl group is bound via an ether or ester function R⁴ to a linear or branched alkyl radical having from 1 to 24 carbon atoms, an aromatic or cycloaliphatic radical, added in blocks or randomly as desired onto a chain starter of the formula (I).

9. Process according to at least one of Claims 1 to 8, **characterized in that** lactones, saturated, unsaturated or aromatic cyclic dicarboxylic anhydrides or carbon dioxide are used either alone or in any mixtures with one another as monomers.

10. Process according to at least one of Claims 1 to 9, **characterized in that** the reaction is carried out in an inert solvent or a mixture of a plurality of inert solvents.

11. Process according to at least one of Claims 1 to 10, **characterized in that** the starter of the formula (I) and/or a previously prepared silicone polyether of the formula (VII) is used as solvent or suspension medium for the DMC catalyst.

12. Process according to at least one of Claims 1 to 11, **characterized in that** the molar ratio of epoxide to the reactive groups of the starter of the formula (I), in particular the OH groups in the starter mixture, is 0.1-100:1 in the start phase.

13. Process according to at least one of Claims 1 to 12, **characterized in that** the reaction is carried out batchwise or continuously.

14. Process according to at least one of Claims 1 to 13, **characterized in that** the DMC catalyst concentration is from > 0 to 5000 wppm based on the total mass of the alkoxylation products formed.

15. Process according to Claim 14, **characterized in that** the catalyst is introduced as solid or in the form of a catalyst suspension.

16. Silicone polyether of the formula (VII), 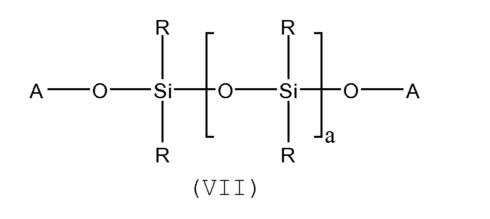 where
the radicals R are identical or different linear
or branched, saturated, monounsaturated or polyunsaturated alkyl radicals having from 1 to 20 carbon atoms,
and
a is an integer from 0 to 5000,
and A is the polyether fragment represented by the formula (VIII) 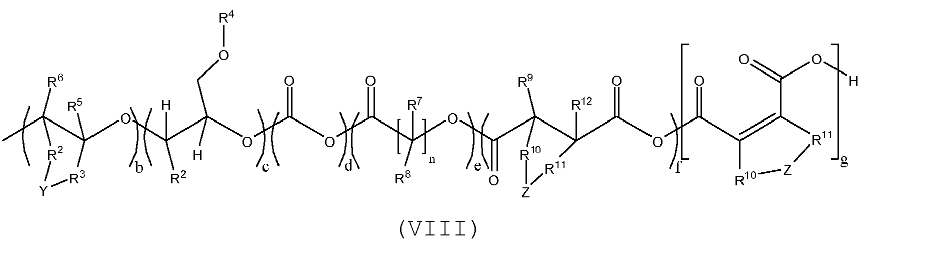 in which R² or R³ and R⁵ or R⁶ are identical or different and are each, independently of one another, H or a saturated or monounsaturated or polyunsaturated, monovalent or polyvalent hydrocarbon radical which may be further substituted, where the radicals R⁵ and R⁶ are each a monovalent hydrocarbon radical and the hydrocarbon radical can be cycloaliphatically bridged via the fragment Y; Y can be absent or be a methylene bridge having 1 or 2 methylene units, when Y is 0 then R² and R³ are each, independently of one another, a linear or branched hydrocarbon radical having 1 to 20 carbon atoms,
R⁴ is an ether or ester function on a linear or branched alkyl radical having from 1 to 24 carbon atoms or an aromatic or cycloaliphatic radical,
n is an integer from 2 to 8 and
R⁷, R⁸, R⁹, R¹⁰, R¹¹ and R¹² are each, independently of one another, hydrogen or an alkyl, alkoxy, aryl or aralkyl group,
Z is a cycloaliphatic or aromatic fragment Z, where Z can represent both a divalent alkylene radical and also alkenylene radical,
a is an integer from 0 to 5000,
b is an integer from 0 to 1000,
c is an integer from 0 to 500,
d is an integer from 0 to 500,
e, f and g are integers from 0 to 500,
with the proviso that
a) the fragments having the indices b to g can be freely permutated among one another, i.e. can be exchanged with one another in the sequence within the polyether chain, and
b) the fragments having the indices b, c and e can be present in blocks or randomly distributed as desired and
c) the sum b + c + d + e + f + g > zero and
d) the indices c to g are different from zero when the index b is from 1 to 200 and at the same time the fragment having the index b is EO (ethylenoxy group) or PO (propylenoxy group) or
e) when the sum of the indices c to g is zero and the index b is from 1 to 200 and the fragments are EO or PO units, these are not present in a random sequence.

17. Polyether siloxanes of the formula (VII) prepared by a process according to any of Claims 1 to 15, with the proviso that compounds of the formula 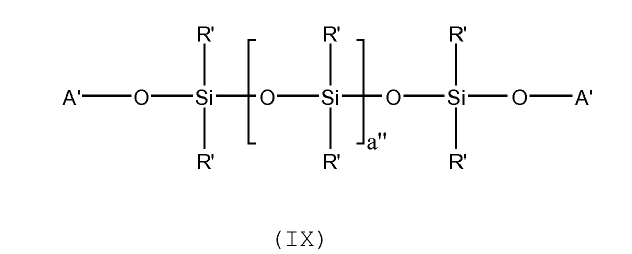 where R' is a methyl group and A' is -(CH₂-CH₂-O)ₕ-(CH₂-CH(CH₃)O)ᵢ-(CH₂-CH₂-O)ⱼ-H and h, i and j can, independently of one another, be from 0 to 200 and the polyether units h, i and j are randomly distributed, are not present.

18. Polyether siloxanes according to Claim 17, with the proviso that compounds of the formula (IX) in which the sum h+i+j > 0 and a" is an integer from 1 to 2000 are not encompassed.

19. Use of polyether siloxanes of the formula (VII) as polyurethane foam stabilizers, wetting agents, dispersing additives, deaerators or antifoams.

## Revendications

1. Procédé pour l'alcoxylation d'organosiloxanes portant des groupes SiOH avec un ou plusieurs oxydes d'alkylène ou monomères époxydes, **caractérisé en ce que** l'alcoxylation a lieu en présence de catalyseurs de type cyanure bimétallique (DMC).

2. Procédé pour la préparation de silicone-polyéthers selon la revendication 1 par polymérisation alcoxylante de monomères époxydes avec des poly(organosiloxanes à partir d'au moins un composé de départ à fonction OH, au moyen de catalyse par DMC.

3. Procédé de la réaction d'alcoxylation catalysée par DMC, dans lequel dans une première étape on dispose au préalable dans un réacteur un mélange de départ, consistant en au moins un α,ω-dihydroxysiloxane et le catalyseur de type cyanure bimétallique, qui éventuellement a été au préalable mis en suspension dans un agent de mise en suspension,
dans une deuxième étape on ajoute à ce mélange disposé au préalable seulement une partie de la quantité de monomère époxyde à ajouter au total, afin d'activer le catalyseur DMC et, après cette phase d'initialisation, on ajoute par addition dosée une nouvelle quantité de monomère époxyde et éventuellement une nouvelle quantité d'α,ω-dihydroxysilane, **caractérisé en ce que** pour l'alcoxylation on utilise des α,ω-dihydroxysiloxanes.

4. Procédé selon au moins l'une quelconque des revendications 1 à 3, **caractérisé en ce qu'**on utilise comme composé de départ à fonction SiOH un ou plusieurs α,ω-dihydroxysiloxanes à modification organique, de formule générale (I), 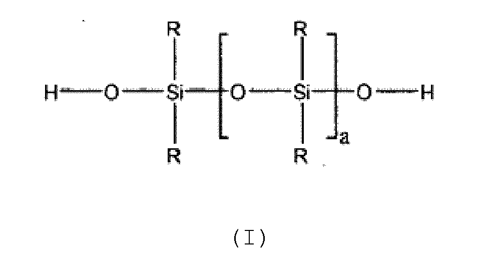 dans laquelle
R représente un ou plusieurs radicaux alkyle identiques ou différents, linéaires ou ramifiés, saturés, une ou plusieurs fois insaturés, ayant de 1 à 20 atomes de carbone, et
a est un nombre entier valant de 0 à 5 000.

5. Procédé selon la revendication 4, **caractérisé en ce que** le radical R dans la formule (I) est le groupe méthyle.

6. Procédé selon l'une quelconque des revendications 1 à 5, **caractérisé en ce qu'**on utilise comme composés de départ à fonction SiOH (I) un ou plusieurs polydiméthylsiloxanes comportant deux groupes hydroxy terminaux et ayant des masses moléculaires de 100 à 400 000 g/mole.

7. Procédé selon au moins l'une quelconque des revendications 1 à 6, caractérisé en ce les monomères époxydes sont incorporés dans la chaîne oxyde d'alkylène du silicone-polyéther en étant à l'extrémité terminale, isolés, assemblés en séquences ou répartis statistiquement.

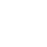

8. Procédé selon au moins l'une quelconque des revendications 1 à 7, **caractérisé en ce qu'**on fait réagir un ou plusieurs polydiméthylsiloxanes selon la formule (I) avec des époxydes de formule (II) ou (III) ou avec un mélange de ces époxydes, 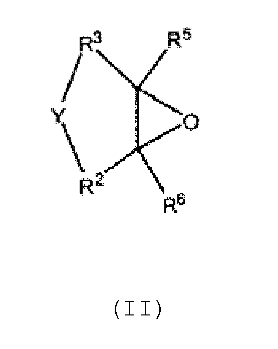 R² ou R³, ainsi que R⁵ ou R⁶, identiques ou bien chacun indépendamment, représentant H ou un radical hydrocarboné saturé ou éventuellement une ou plusieurs fois insaturé, également substitué davantage, éventuellement mono- ou plurivalent, étant entendu qu'en ce qui concerne les radicaux R⁵ ou R⁶ il s'agit d'un radical hydrocarboné monovalent et le radical hydrocarboné peut être ponté en un radical cycloaliphatique par le fragment Y ; Y pouvant ne pas être présent, ou bien être un pont méthylène comportant 1 ou 2 unités méthylène, si Y est égal à 0, R² ou R³ représentent indépendamment l'un de l'autre un radical linéaire ou ramifié ayant de 1 à 20 atomes de carbone ; les radicaux hydrocarbonés R² et R³ selon la formule (II) pouvant pour leur part être substitués davantage et porter des groupes fonctionnels tels que des atomes d'halogène, des groupes hydroxy ou des groupes glycidyloxypropyle ; ou 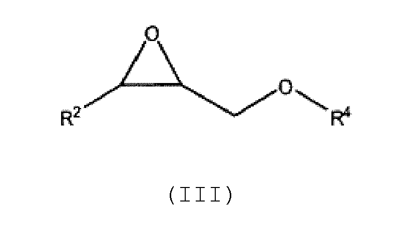 dans lesquels au moins un groupe glycidyloxypropyle est lié par une fonction éther ou ester R⁴ à un radical alkyle linéaire ou ramifié ayant de 1 à 24 atomes de carbone, à un radical aromatique ou cycloaliphatique, fixé par addition au choix séquentiellement ou statistiquement à un composé d'initialisation de chaîne, de formule (I).

9. Procédé selon au moins l'une quelconque des revendications 1 à 8, **caractérisé en ce qu'**on utilise comme monomères des lactones, des anhydrides d'acides dicarboxyliques cycliques saturés, insaturés ou aromatiques, ou du dioxyde de carbone seuls ou en mélanges quelconques entre eux.

10. Procédé selon au moins l'une quelconque des revendications 1 à 9, **caractérisé en ce qu'**on effectue la réaction dans un solvant inerte ou dans des mélanges de plusieurs solvants inertes.

11. Procédé selon au moins l'une quelconque des revendications 1 à 10, **caractérisé en ce qu'**on utilise comme solvant ou agent de mise en suspension pour le catalyseur DMC le composé de départ de formule (I) et/ou un silicone-polyéther de formule (VII) produit précédemment.

12. Procédé selon au moins l'une quelconque des revendications 1 à 11, **caractérisé en ce que** le rapport molaire de l'époxyde aux groupes réactifs du composé de départ de formule (I), en particulier aux groupes OH dans le mélange de départ, dans la phase d'initialisation vaut de 0,1 à 100 : 1.

13. Procédé selon au moins l'une quelconque des revendications 1 à 12, **caractérisé en ce que** la réaction s'effectue en continu ou en mode discontinu.

14. Procédé selon au moins l'une quelconque des revendications 1 à 13, **caractérisé en ce que** la concentration du catalyseur DMC vaut > 0 à 5 000 ppm en poids par rapport à la masse totale des produits d'alcoxylation formés.

15. Procédé selon la revendication 14, **caractérisé en ce qu'**on ajoute par addition dosée le catalyseur sous forme de solide ou sous forme d'une suspension de catalyseur.

16. Silicone-polyéther de formule (VII), 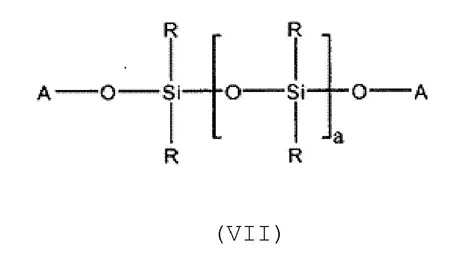 dans laquelle
R correspond à un ou plusieurs radicaux alkyle
identiques ou différents, linéaires ou ramifiés, saturés, une ou plusieurs fois insaturés, ayant de 1 à 20 atomes de carbone,
et
a est un nombre entier valant de 0 à 5 000,
A correspondant au fragment polyéther représenté par la formule (VIII), 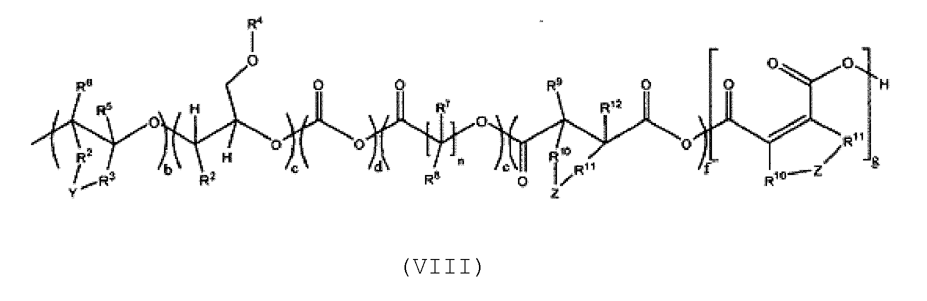 dans lequel R² ou R³, ainsi que R⁵ ou R⁶, identiques ou
bien chacun indépendamment, représentent H ou un radical hydrocarboné saturé ou éventuellement une ou plusieurs fois insaturé, également substitué davantage, éventuellement mono- ou plurivalent, étant entendu qu'en ce qui concerne les radicaux R⁵ ou R⁶ il s'agit d'un radical hydrocarboné monovalent et le radical hydrocarboné peut être ponté en un radical cycloaliphatique par le fragment Y ; Y peut ne pas être présent, ou bien être un pont méthylène comportant 1 ou 2 unités méthylène, si Y est égal à 0, R² ou R³ représentent indépendamment l'un de l'autre un radical hydrocarboné linéaire ou ramifié ayant de 1 à 20 atomes de carbone,
R⁴ représente une fonction éther ou ester sur un radical alkyle linéaire ou ramifié ayant de 1 à 24 atomes de carbone, ou un radical aromatique ou cycloaliphatique,
n représente un nombre entier valant de 2 à 8 et
R⁷, R⁸, R⁹, R¹⁰, R¹¹ et R¹² représentent, indépendamment les uns des autres, un atome d'hydrogène, des groupes alkyle, alcoxy, aryle ou aralkyle,
Z correspond à un fragment Z cycloaliphatique ou aromatique, Z pouvant être aussi bien un radical alkylène divalent qu'un radical alcénylène divalent,
a est un nombre entier valant de 0 à 5 000,
b est un nombre entier valant de 0 à 1 000,
c est un nombre entier valant de 0 à 500,
d est un nombre entier valant de 0 à 500, e, f et g sont des nombres entiers valant de 0 à 500,
étant entendu
a) que les fragments portant les indices b à g sont librement permutables entre eux, c'est-à-dire sont échangeables entre eux dans la séquence à l'intérieur de la chaîne polyéther et
b) les fragments portant les indices b, c et e peuvent au choix aussi bien être alignés séquentiellement les uns à la suite des autres que se trouver répartis statistiquement et
c) la somme b + c + d + e + f + g est > zéro et
d) les indices c à g sont différents de zéro, lorsque l'indice b vaut de 1 à 200 et en même temps le fragment portant l'indice b correspond à EO (groupe oxyde d'éthylène) ou PO (groupe oxyde de propylène) ou
e) lorsque la somme des indices c à g est égale à zéro et l'indice b est compris entre 1 et 200 et les fragments correspondent à des unités EO ou PO, ceux-ci ne se trouvent pas répartis statistiquement dans la succession.

17. Polyéthersiloxanes de formule (VII) préparés conformément à l'un des procédés selon les revendications 1 à 15, étant entendu que ne sont pas contenus les composés de formule 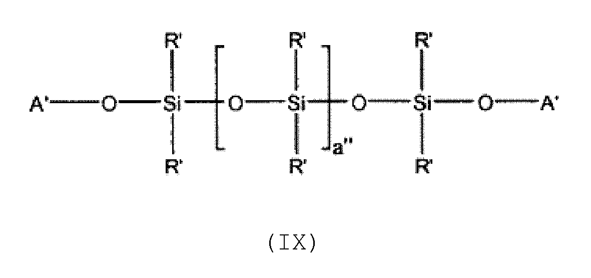 dans laquelle R' est un groupe méthyle et A' représente -(CH₂-CH₂-O)ₕ-(CH₂-CH(CH₃)O)ᵢ-(CH₂-CH₂-O)ⱼ-H et h, i et j peuvent avoir, chacun indépendamment, des valeurs de 0 à 200 et les motifs polyéther h, i et j sont répartis statistiquement.

18. Polyéthersiloxanes selon la revendication 17, étant entendu que ne sont pas englobés les composés de formule (IX) où la somme de h+i+j est > 0 et a" représente un nombre entier ayant une valeur de 1 à 2 000.

19. Utilisation de polyéthersiloxanes de formule (VII) comme stabilisants de mousses de polyuréthane, agents mouillants, additifs de dispersion, désaérateurs ou antimousses.
